# EUROPEAN PATENT SPECIFICATION

(11) **EP 4 254 911 B1**
(45) Date of publication and mention of the grant of the patent: **18.12.2024**
(21) Application number: 22305380.2
(22) Date of filing: 28.03.2022
(51) Int. Cl.: H04L 67/568, H04N 21/60, H04L 67/1034, H04N 21/234, H04N 21/44, H04N 21/6405

(54) **METHOD FOR ENSURING SERVICE CONTINUITY WHEN DELIVERING AN AUDIO AND/OR VIDEO CONTENT IN A MOBILE NETWORK**
VERFAHREN ZUR SICHERSTELLUNG DER DIENSTKONTINUITÄT BEI DER BEREITSTELLUNG VON AUDIO- UND/ODER VIDEOINHALT IN EINEM MOBILFUNKNETZ
PROCÉDÉ POUR ASSURER LA CONTINUITÉ DE SERVICE LORS DE LA FOURNITURE D'UN CONTENU AUDIO ET/OU VIDÉO DANS UN RÉSEAU MOBILE

(43) Date of publication of application: 04.10.2023
(73) Proprietor: Broadpeak, 35510 Cesson Sevigne (FR)
(72) Inventor: Bichot, Guillaume, 35630 LA CHAPELLE CHAUSSEE (FR); Richard, Vincent, 35250 CHEVAIGNE (FR); Tran, Tuan, 31170 TOURNEFEUILLE (FR)
(74) Representative: Cabinet Le Guen Maillet

(56) References cited:
- EP-A1- 3 869 763

## Description

### TECHNICAL FIELD

The present invention generally relates to delivering audio and/or video contents, such as in a scope of Content Delivery Network (CDN), on top of a mobile network, while ensuring service continuity to mobile terminals, to which the audio and/or video contents are delivered by a cache server, in situations where the cache server is about to be no more able to ensure the service continuity.

### RELATED ART

MEC (Multi-access Edge Computing) is an ETSI (European Telecommunications Standards Institute) group and specifications set related to platforms that sit close to mobile network edges, typically located physically at eNodeB location or not far therefrom (typically at a central office). MEC defines conditions to trigger instantiation of applications mobile network edges, the way to steer traffic to/from the applications and how to embed, deploy and manage applications with MEC platform. Breakout functions are thus used as offloading solution of access networks to reduce load of core networks and end-to-end latency. One may for instance refer to ETSI White Paper No. 20, Developing Software for Multi-Access Edge Computing, Dario Sabella et al, 2nd ed., February 2019, ISBN No. 979-10-92620-29-0.

Streaming audio and/or video over a mobile network is particularly challenging. Radio networks are very sensible and Round-Trip Time (RTT), as well as bandwidth, can vary quickly. Having a connection between a mobile terminal and an audio and/or video server of a Content Delivery Network (CDN, which resides beyond the mobile core network), making abstraction of radio access variability, has been shown to be suboptimal. Moreover, it is desirable, at least for resources consumption, to limit communication distances between the audio and/or video server and the mobile terminal to be served. It implies that, ideally, audio and/or video server infrastructure should be as close as possible to radio access network borders. Thus, MEC platforms seem to be well-suited for that purpose, in particular for 4G (4^{th} Generation) and 5G (5^{th} Generation) mobile networks. Audio and/or video cache servers can then be deployed deeply in the mobile network up to the radio network edges, using a breakout function as overseen by the MEC group.

However, deploying cache servers deeply in the mobile network up to the radio network edges may generate service discontinuities. Such service discontinuities occur in situations where the cache server is about to be no more able to ensure the service continuity. For example, such situations are handovers of mobile terminals in the mobile network. Other situations are scheduled shutdowns of the cache server in question or reconfiguration of the cache server in question to use differently its internal resources (memory, processing...), e.g., to free resources to handle other, more popular, audio and/or video contents.

It is then desirable to provide a CDN architecture on top of a mobile network, which ensures audio and/or video delivery service continuity to mobile terminals, to which the audio and/or video contents are delivered by a cache server, in situations where the cache server is about to be no more able to ensure the service continuity. It may also be desirable to provide such a CDN architecture that ensure service continuity in view of mobile terminals' mobility (such as handovers in the mobile network).

It can be noted that it is known from EP 3,869,763 A1 that any and all cache servers of an audio and/or video content delivery system deployed on top of a mobile network share a same anycast addressing.

### SUMMARY OF THE INVENTION

To that end, it is herein proposed a method for delivering an audio and/or video content to a mobile terminal by an audio and/or video content delivery system deployed on top of a mobile network, wherein the audio and/or video content delivery system comprises plural cache servers, the cache servers are arranged using a layer-based hierarchical tree topology, the cache servers are connected to respective aggregation nodes of the mobile network such that a configurable breakout function of the aggregation nodes enables routing to the cache servers packets addressed to an anycast addressing associated with the cache servers. Each layer of the layer-based hierarchical tree topology is associated with an anycast addressing so that each layer of the layer-based hierarchical tree topology has a dedicated anycast addressing, and the method comprises: allocating to the mobile terminal the anycast addressing corresponding to the layer of a first cache server, from which the audio and/or video content is to be delivered to the mobile terminal, among the cache servers. The method further comprises: configuring traffic steering addressed to the anycast addressing associated with a layer by configuring the configurable breakout function of the aggregation node connected to an active cache server of said layer so as to route the traffic addressed to the anycast addressing associated with said layer to the active cache server; and further configuring traffic steering addressed to the anycast addressing associated with any and all downstream layers, with respect to the layer of the active cache server, by configuring the configurable breakout function of the aggregation node connected with said active cache server so as to also route the traffic addressed to the anycast addressing associated with said any and all downstream layers to the active cache server, so that when the first cache server is not able to ensure service continuity for delivering the audio and/or video content to the mobile terminal, said service continuity is automatically ensured by a second cache server located upstream in the layer-based hierarchical tree topology with respect to the first cache server, wherein the second cache server is the active cache server. Thus, thanks to the layer-based anycast addressing applied to the cache servers and the adequate traffic steering configuration, service continuity is ensured for delivering the audio and/or video content to the mobile terminal.

In a particular embodiment, the method comprises, upon detecting a situation in which the first cache server is not able to ensure service continuity for delivering the audio and/or video content to the mobile terminal, instructing the first cache server to redirect the mobile terminal to the anycast addressing associated with the layer of the second cache server. Thus, the mobile terminal can be redirected to the second cache server without any need to move any other mobile terminal to an anchoring to the second cache server.

In a particular embodiment, the method comprises: detecting that the mobile terminal has to undergo a handover from a source cell in a first zone handled by the first cache server, to a target cell in a second zone handled by a third cache server; determining the second cache as a cache server able to provide the audio and/or video content to the mobile terminal, the second cache server being located upstream in the layer-based hierarchical tree topology with respect to the first cache server and the third cache server, and retrieving the anycast addressing associated with the layer in which the second cache server is located so as to redirect the mobile terminal to the anycast addressing associated with the second cache server. Thus, service continuity is ensured despite the handover.

In a particular embodiment, the method comprises: upon detecting that the mobile terminal has moved from the first zone to the second zone, redirecting the mobile terminal to the anycast addressing associated with the third cache server handling the second zone. Thus, latency is improved for delivering the audio and/or video content to the mobile terminal once the handover has been completed.

In a particular embodiment, wherein redirecting the mobile terminal to the anycast addressing associated with the third cache server is performed by the second cache server in response to a manifest request or playlist request received from the mobile terminal with respect to the audio and/or video content.

In a particular embodiment, redirecting the mobile terminal to the anycast addressing associated with the second cache server is performed by the first cache server in response to a manifest request or playlist request received from the mobile terminal with respect to the audio and/or video content.

In a particular embodiment, traffic steering is configured by an orchestrator of the audio and/or video content delivery system, and when the mobile terminal has to be redirected, the orchestrator further instructs the cache server, to which the mobile terminal is anchored, to redirect the mobile terminal and provides information indicating to which anycast addressing the mobile terminal has to be redirected.

In a particular embodiment, the audio and/or video content delivery system comprises cache controllers respectively managing the cache servers, the cache controllers are connected to respective aggregation nodes of the mobile network such that the configurable breakout function of the aggregation nodes enables routing to the cache controllers packets addressed to another anycast addressing associated on a per-layer basis with the cache controllers.

In a particular embodiment, the method comprises: upon receiving, for the mobile terminal, a session request requesting delivery of the audio and/or video content, a cache controller allocates to the mobile terminal the anycast addressing corresponding to the layer of the first cache server.

In a particular embodiment, the method comprises detecting that deactivation conditions are met for one said cache server, referred to as cache server to be deactivated; selecting at least one substitute cache server for continuing audio and/or video content delivery to each mobile terminal anchored to the cache server to be deactivated; determining, for each mobile terminal anchored to the cache server to be deactivated, a substitute cache server which is located upstream or downstream in the layer-based hierarchical tree topology with respect to the cache server to be deactivated, and which is able to continue delivering the audio and/or video content to the mobile terminal in question, and retrieving the anycast addressing associated with the layer in which the substitute cache server is located; redirecting, to the retrieved anycast addressing, each mobile terminal which is anchored to the cache server to be deactivated; and deactivating the cache server to be deactivated.

In a particular embodiment, the method comprises: detecting that offloading conditions are met for one said cache server, referred to as cache server to be offloaded; selecting at least one terminal, anchored to the cache server to be offloaded, which has to be served by a substitute cache server; retrieving the anycast addressing associated with the layer in which the substitute cache server is located; redirecting, to the retrieved anycast addressing, each mobile terminal which is anchored to the cache server to be offloaded; and deactivating the cache server to be offloaded.

It is further proposed herein a computer program product comprising instructions causing execution of the foregoing method, in any one of its embodiments, when said instructions are run by a processor. It is further proposed herein an information storage medium storing instructions causing execution of the foregoing method, in any one of its embodiments, when said instructions are read from the information storage medium and run by a processor.

It is further proposed herein an audio and/or video content delivery system for delivering an audio and/or video content to a mobile terminal, the audio and/or video content delivery system being intended to be deployed on top of a mobile network, wherein the audio and/or video content delivery system comprises plural cache servers, the cache servers are arranged using a layer-based hierarchical tree topology, the cache servers are connected to respective aggregation nodes of the mobile network such that a configurable breakout function of the aggregation nodes enables routing to the cache servers packets addressed to an anycast addressing associated with the cache servers. Each layer of the layer-based hierarchical tree topology is associated with an anycast addressing so that each layer of the layer-based hierarchical tree topology has a dedicated anycast addressing, and the audio and/or video content delivery system comprises electronic circuitry configured for: allocating to the mobile terminal the anycast address corresponding to the layer of a first cache server, from which the audio and/or video content is to be delivered to the mobile terminal, among the cache servers. The electronic circuitry is further configured for: configuring traffic steering addressed to the anycast addressing associated with a layer by configuring the configurable breakout function of the aggregation node connected to an active cache server of said layer so as to route the traffic addressed to the anycast addressing associated with said layer to the active cache server; and further configuring traffic steering addressed to the anycast addressing associated with any and all downstream layers, with respect to the layer of the active cache server, by configuring the configurable breakout function of the aggregation node connected with said active cache server so as to also route the traffic addressed to the anycast addressing associated with said any and all downstream layers to the active cache server, so that when the first cache server is not able to ensure service continuity for delivering the audio and/or video content to the mobile terminal, said service continuity is automatically ensured by a second cache server located upstream in the layer-based hierarchical tree topology with respect to the first cache server, wherein the second cache server is the active cache server.

### BRIEF DESCRIPTION OF THE DRAWINGS

The characteristics of the invention will emerge more clearly from a reading of the following description of at least one embodiment, said description being produced with reference to the accompanying drawings, among which:
- Fig. 1 schematically represents an audio and/or video content delivery system on top of a mobile network, in which the present invention may be implemented;
- Fig. 2 schematically represents the audio and/or video content delivery system in a layered logical arrangement, in a particular embodiment;
- Fig. 3 schematically represents an example of hardware architecture of a device usable in the scope of the audio and/or video content delivery system;
- Fig. 4 schematically represents an algorithm for ensuring audio and/or video content delivery service continuity when a mobile terminal moves from a first zone to a second zone, in a particular embodiment;
- Fig. 5 schematically represents the layered logical arrangement of Fig. 2 wherein a mobile terminal is about to move from the first zone, in a particular embodiment;
- Fig. 6 schematically represents the layered logical arrangement of Fig. 2 wherein the mobile terminal has moved to the other zone, in a particular embodiment;
- Fig. 7 schematically represents an algorithm for ensuring audio and/or video content delivery service continuity when deactivating a cache server in the audio and/or video content delivery system, in a particular embodiment;
- Fig. 8 schematically represents an algorithm for ensuring audio and/or video content delivery service continuity when offloading a cache server in the audio and/or video content delivery system, in a particular embodiment;
- Fig. 9 schematically represents the layered logical arrangement of Fig. 2 in which a cache server has been deactivated, in a particular embodiment; and
- Fig. 10 schematically represents an algorithm for ensuring audio and/or video content delivery service continuity in the audio and/or video content delivery system.

### DETAILED DESCRIPTION OF AT LEAST ONE EMBODIMENT

For delivering an audio and/or video content to a mobile terminal, a content delivery system is deployed on top of a mobile network. The content delivery system comprises plural cache servers arranged using a layer-based hierarchical tree topology. The cache servers are connected to respective aggregation nodes of the mobile network such that a breakout function of the aggregation nodes enables routing thereto packets addressed to a layer-based anycast addressing associated with the cache servers. The breakout function of the aggregation nodes is thus configurable to perform traffic steering. Detailed embodiments are provided hereafter.

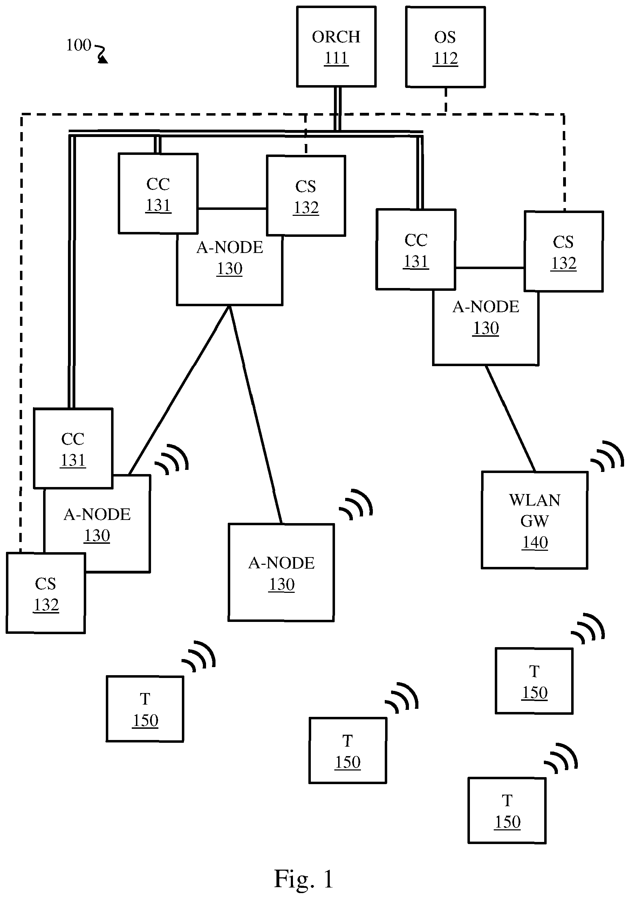

Fig. 1 schematically represents an audio and/or video content delivery system 100 deployed on top of a mobile network. The audio and/or video content delivery system 100 comprises a set of plural cache servers CS 132.

The cache servers CS 132 aim at transmitting segments of audio and/or video contents to mobile terminals T 150, which are connected by radio to the mobile network and which thus may undergo handovers in the mobile network over time (and more especially during the same session of delivering an audio and/or video content thereto). The segments are transported in a form of packets over the mobile network.

For example, the audio and/or video content delivery system 100 implements adaptive streaming technology, such as HLS (standing for "HTTP Live Streaming", which is a live streaming communications protocol based on HTTP and developed by Apple Inc.) or DASH (standing for "Dynamic Adaptive Streaming over HTTP", which is a multimedia streaming technology developed by the Moving Picture Experts Group (MPEG)).

For instance, the mobile network complies with LTE (Long-Term Evolution) 4G or 5G. The mobile terminals T 150 may thus access the mobile network via base stations, eNodeBs, but may also access the mobile network via wireless local area networks (WLAN) cells included therein, such as hotspots, for instance provided by WLAN gateways 140.

The mobile network comprises aggregation nodes (each one being labelled ANODE 130 in Fig. 1). Such aggregation nodes are, or are located close to, base stations, eNodeBs, or central offices. The aggregation nodes are typically Packet data network GateWays (P-GWs) or Serving GateWays (S-GWs), Terminating User Plane Functions (TUPFs), depending on mobile network technology in use. At least some of the aggregation nodes 130 of the mobile network implement a breakout function. MEC-based platforms can thus benefit from the breakout function so as to host cache instances.

The cache servers CS 132 may be physical appliances, or virtual instances deployed in relatively small cloud infrastructure (also referred to as *cloudlet)* for instance based on MEC-based platforms, preferably attached to the aggregation nodes of the mobile network.

The cache servers CS 132 are fed with segments of audio and/or video contents by an origin server OS 112. The cache servers CS 132 preferably obtain such segments of audio and/or video contents by requesting them to the origin server OS 112, when the cache servers CS 132 are permitted to do so. The origin server OS 112 may be part of the audio and/or video content delivery system 100 or external thereto (typically, when the origin server OS 112 is managed by a content provider and the audio and/or video content delivery system 100 is managed by a CDN infrastructure provider).

The origin server OS 112 may transmit segments of the audio and/or video contents in question to the cache servers CS 132 using broadcast, multicast or unicast transmissions.

Each cache server CS 132 is connected to the breakout function of an aggregation node 130 of the mobile network. Any aggregation node 130 to which is connected a cache server CS 132 implements a configurable breakout function that allows selectively routing packets, typically IP (Internet Protocol) packets, according to configurable traffic steering rules. Such traffic steering rules may define that packets with such or such destination address and/or such or such source address have to be routed to the cache server CS 132 in question. The breakout function further allows the cache server CS 132 connected thereto to transmit packets via the mobile network. The breakout function thus enables deploying an infrastructure of cache servers at locations closer to served mobile terminals T 150 compared with the location of the origin server OS 112, which thus reduces latency and network load. Obviously, as a counterpart, deploying cache servers at locations closer to the served mobile terminals T 150 is more costly in terms of computing and memory resources since more cache servers are needed to cover a wide geographical zone.

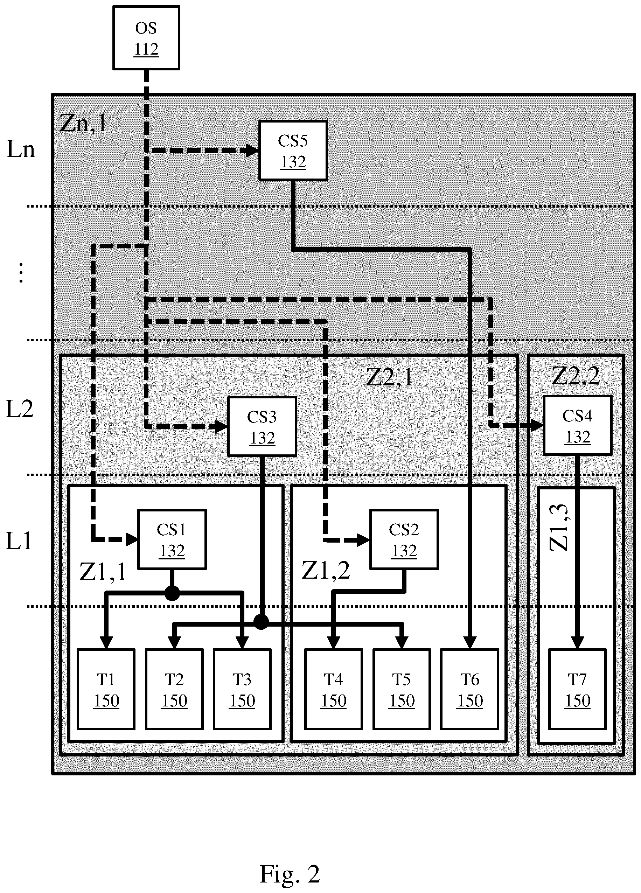

As schematically shown in **Fig. 2****,** the cache servers CS 132 are hierarchically organized in a layer-based logical tree topology. The tree hierarchy of cache servers CS 132 is composed of *n* layers denoted herein Li, with *i* = *1,.., n.* Cache servers CS 132 that are the farthest in the mobile network to the mobile terminals T 150 to be served compose the layer Ln. Cache servers CS 132 that are the closest in the mobile network to the mobile terminals T 150 to be served compose the layer L1 and cache servers CS 132 that are located immediately upstream, in the hierarchy, compose the layer L2, etc.

Each layer is associated with a dedicated anycast addressing (typically, an anycast IP address and potentially a domain name associated therewith, which enables retrieving the anycast IP address through DNS (Domain Name System) procedures) associated to the cache server(s) CS 132 of said layer. It is referred herein to anycast addressing when referring to the at least one anycast IP address or to the potentially at least one respective domain name associated therewith. Thus, each cache server CS 132 composing the layer L1 is associated with an anycast addressing @IP1, each cache server CS 132 composing the layer L2 is associated with an anycast addressing @IP2... and each cache server CS 132 composing the layer Ln is associated with an anycast addressing @IPn. Generally speaking, each cache server CS 132 composing the layer Li is associated with an anycast addressing @IPi, with *i* = *1,.., n.*

Anycast addressing is a one-to-one-of-many transmission, wherein packets are routed to one receiver among plural potential receivers that are all identified by the same unicast address. Thus, when one cache server CS 132 of layer Li is connected to with the breakout function of an aggregation node 130 and when the aggregation node 130 in question, being appropriately configured, receives a packet having the anycast address @IPi associated with the layer Li as destination address, the breakout function routes said packet to the cache server CS 132 in question. It implies that any aggregation node 130 is, at most, connected to one cache server CS 132.

When there is no cache server CS 132 of layer Li attached to an aggregation node 130 (there is indeed no guaranty that deploying a cache server is possible or the cache server can be off), then the packets having the anycast addressing @IPi associated with the layer Li as destination address are not routed by the breakout function of the aggregation node 130 of layer Li but by the breakout function of the next upstream aggregation node 130 attached to an active/available cache server CS 132. This can be achieved by applying the following traffic steering configuration of the breakout function of the aggregation nodes 130 with respect to the cache servers CS 132:
- the breakout function of an aggregation node of layer Li is configured for routing packets destinated to the anycast addressing @IPi associated with the layer Li but also packets destinated to the anycast addressing @IPj with j such that 0 < j < i. With such a rule, whenever a cache server CS 132 disappears at layer Lj, the corresponding breakout function of aggregation node 130 of layer Lj is reconfigured to stop routing packets through its breakout function but instead sending packet upstream and so on until the packets reach the aggregation node 130 of the layer Li for which the breakout function has been configured for routing packets to an active cache server CS 132 connected to said aggregation node 130.

As explained here below, the audio and/or video content delivery system 100 is logically composed of a plurality of zones, wherein each zone consists of geographical coverage of one or more cells. Each zone preferably consists of a plurality of cells.

In Fig. 2, the audio and/or video content delivery system 100 is logically composed of zones Zn,1, Z2,1 Z2,2, Z1,1, Z1,2 and Z1,3. Each zone hosts one or no cache server CS 132 (in Fig. 2, the zone Z1,3 does not host any cache server CS 132), which, in a particular embodiment, can be activated or inactivated on demand. When the cache servers CS 132 are deployed as virtual cache servers (virtual machines or containers) then activating means instantiating and inactivating means removing an instance.

In Fig. 2, the zone Z1,1 covers a first set of cells of the mobile network, in which, illustratively, three terminals T1, T2, T3 150 have to be served for audio and/or video content delivery. The zone Z1,1 extends from layer L1 downward to the mobile terminals T 150. The zone Z1,1 is handled by one cache server CS 1 132. The zone Z1,2 covers a second set of cells of the mobile network, in which, illustratively, three terminals T4, T5, T6 150 have to be served for audio and/or video content delivery. The zone Z1,2 extends from layer L1 downward to the mobile terminals T 150. The zone Z1,2 is handled by one cache server CS2 132. The zone Z1,3 covers a third set of cells of the mobile network, in which, illustratively, one mobile terminal T7 150 has to be served for audio and/or video content delivery. The zone Z1,3 extends from layer L1 downward to the mobile terminals T 150. The zone Z1,3 is handled by no cache server CS 132. The zones Z1,j, with *j* = *1,...m*, where *m* is a quantity of predefined sets of cells which jointly forms the geographical coverage of the mobile network, are zones handled by the cache servers CS 132 of the layer L1. In other terms, m is a predetermined quantity of zones of the layer L1, and the zone Z1,j extends from layer L1 downward to the mobile terminals T 150.

Immediately upstream with respect to the cache servers CS1 and CS2 132, one cache server CS3 132 is present in the tree hierarchy of the audio and/or video content delivery system 100 and the cache server CS3 132, which lies in the layer L2, handles the zone Z2,1. The zone Z2,1 extends from layer L2 downward to the mobile terminals T 150 and includes the zones Z1,1 and Z1,2. The cache server CS3 132 is a substitute cache server for the cache servers CS 1 and CS2 132, when an audio and/or video content to be served to a terminal T 150 located in the zone Z1,1 or Z1,2 cannot be provided by the concerned cache server CS1 or CS2 132 (typically, audio and/or video content not in cache or cache server overloaded), unless the audio and/or video content in question cannot be provided by the cache server CS3 132 (typically, audio and/or video content not in cache or cache server overloaded). In this latter case, the delivery of the audio and/or video content is performed by another cache server CS 132 upstream with respect to the cache server CS3 132.

The zone Z1,3 is included in the zone Z2,2, which is handled by one cache server CS4 132. Since there is no active cache server CS 132 in the zone Z1,3 (tree depth for the zone Z2,2 is shorter than tree depth for the zone Z2,1), the cache server CS4 132 is used to perform audio and/or video content delivery to the mobile terminal T7 150, unless the audio and/or video content in question cannot be provided by the cache server CS4 132 (typically, audio and/or video content not in cache or cache server overloaded). In this latter case, the delivery of the audio and/or video content is performed by another cache server CS 132 upstream with respect to the cache server CS4 132. The zone Z2,2 extends from layer L2 downward to the mobile terminals T 150.

The zone Zn,1 is the top layer zone of the audio and/or video content delivery system 100. The zone Zn,1 is handled by one cache server CS5 132 and includes the zones Z2,1 and Z2,2, as well as any other zone that includes said zone Z2,2 and/or Z2,2. The zone Zn,1 thus extends from layer Ln downward to the mobile terminals T 150. The cache server CS5 132 thus performs delivery of audio and/or video content when no downstream cache server CS 132 is able to provide said audio and/or video content to a terminal located in a zone included in the zone Zn,1.

Illustratively in Fig. 2, delivery of a first content CT1 has been requested by the mobile terminals T1, T3 and T4. Moreover, delivery of a second content CT2 has been requested by the mobile terminals T2 and T5 150. Furthermore, delivery of a third content CT3 has been requested by the mobile terminal T6 and delivery of a fourth content CT4 has been requested by the mobile terminal T7. To enable content delivery, the origin server OS 112 feeds the cache server CS 132 with audio and/or video contents in a form of segments to be provided to the mobile terminals T1, T2, T3, T4, T5, T6 and T7 150. Not all audio and/or video contents in question are provided to all cache servers CS 132. This is a question of trade-off between expense of cache servers activation and of contents duplication, on one hand, and latency (Round Trip Time (RTT)) for serving the mobile terminals T 150, on the other hand.

Thus, illustratively, the first content CT1 is fed by the origin server OS 112 to the cache servers CS1 and CS2 132. The cache server CS1 132 delivers the first content CT1 to the mobile terminals T1 and T3 150. The cache server CS2 132 delivers the first content CT1 to the mobile terminal T4 150. The second content CT2 is fed by the origin server OS 112 to the cache server CS3 132, but not to the cache servers CS1 and CS2 132. Thus, the cache server CS3 132 delivers the second content CT2 to the mobile terminals T2 and T5 150, since the cache server CS3 132 (zone Z2,1) is located upstream with respect to the cache servers CS1 and CS2 132 (zones Z1,1 and Z1,2 respectively) in the tree hierarchy of the audio and/or video content delivery system 100. The third content CT3 is fed by the origin server OS 112 to the cache server CS5 132, but not to the cache servers CS2 and CS3 132. Thus, the cache server CS5 132 delivers the third content CT3 to the mobile terminal T6 150, since the cache server CS5 132 (zone Zn,1) is located upstream with respect to the cache servers CS2 and CS3 132 (zones Z1,2 and Z2,1 respectively) in the tree hierarchy of the audio and/or video content delivery system 100. The fourth content CT4 is fed by the origin server OS 112 to the cache server CS4 132 (zone Z2,2), which then delivers the fourth content CT4 to the mobile terminal T7 150, since there is no available cache server CS 132 in the layer L1 zone Z1,3 in which the mobile terminal T7 is located.

In order to enable the appropriate audio and/or video content delivery, the mobile terminals T 150 shall use appropriate anycast addressing when requesting the audio and/or video content segments, and traffic steering shall be appropriately configured in the aggregation nodes 130 to which are connected the cache servers CS 132.

In order to receive the segments of the first content CT1, the mobile terminals T1, T3 and T4 150 transmit corresponding requests using the anycast addressing @IP1 as destination address. Thanks to traffic steering by the breakout function of the aggregation node 130 to which is connected the cache server CS1 132, the requests coming from the mobile terminals T1 and T3 150 are routed to the cache server CS1 132. Identically, the requests coming from the mobile terminal T4 150 are routed to the cache server CS2 132.

In order to receive the segments of the second content CT2, the mobile terminals T2 and T5 150 transmit corresponding requests using the anycast addressing @IP2 as destination address. Thanks to traffic steering by the breakout function of the aggregation node 130 to which is connected the cache server CS3 132, the requests coming from the mobile terminals T2 and T5 150 are routed to the cache server CS3 132.

In order to receive the segments of the third content CT3, the mobile terminal T6 150 transmits corresponding requests using the anycast addressing @IPn as destination address. Thanks to traffic steering by the breakout function of the aggregation node 130 to which is connected the cache server CS5 132, the requests coming from the mobile terminal T6 150 are routed to the cache server CS5 132.

In order to receive the segments of the fourth content CT4, the mobile terminal T7 150 transmits corresponding requests using the anycast addressing @IP2 as destination address. Thanks to traffic steering by the breakout function of the aggregation node 130 to which is connected the cache server CS4 132, the requests coming from the mobile terminal T7 150 are routed to the cache server CS4 132.

In a particular embodiment, the mobile terminal T7 150 transmits corresponding requests using the anycast addressing @IP1 as destination address. Thanks to traffic steering by the breakout function of the aggregation node 130 to which is connected the cache server CS4 132, these requests coming from the mobile terminal T7 150 are routed to the cache server CS4 132. Indeed, traffic steering is configured according to the aforementioned rule that defines that the breakout function of the aggregation node 130 of layer Li is configured for routing packets destinated to the anycast addressing @IPi associated with the layer Li but also packets destinated to the anycast addressing @IPj with j such that 0 < j < i.

In order to configure adequate traffic steering, the audio and/or video content delivery system 100 comprises an orchestrator ORCH 111, in a particular embodiment. The orchestrator ORCH 111 manages the layer-based tree hierarchy of the audio and/or video content delivery system 100. The orchestrator ORCH 111 configures the breakout function of the aggregation nodes 130 to enforce traffic steering rules.

As shown in Fig. 1, the orchestrator ORCH 111 may be assisted by cache controllers CC 131. The cache controllers CC 131 then act as intermediate devices between the orchestrator ORCH 111, on one hand, and the cache servers CS 132 and the aggregation nodes 130, on the other hand. Assisting the orchestrator ORCH 111 with the cache controllers CC 131 avoids that the orchestrator ORCH 111 has to directly control the cache servers CS 132 and configuration of the breakout function of the aggregation nodes 130, which enables implementing a control workflow independent from the technology and supported protocols of the cache servers CS 132 and of the aggregation nodes 130.

When the audio and/or video content delivery system 100 includes cache controllers CC 131, addressing of said cache controllers CC 131 also relies on per-layer anycast addressing. Thus, each layer is further associated with another dedicated anycast addressing (typically, an anycast IP address and potentially a domain name associated therewith, which enables retrieving the anycast IP address through DNS procedures) associated to the cache controller(s) CC 131 of said layer.

Preferably, when there is no cache controller CC 131 of layer Li attached to an aggregation node 130 (typically because there is no cache server CS 132 attached thereto neither), then the packets having the cache controllers' anycast addressing associated with the layer Li as destination address are not routed by the breakout function of the aggregation node 130 of layer Li but by the breakout function of the next upstream aggregation node 130 attached to an active/available cache controller CC 131. This can be achieved by applying the following traffic steering configuration of the breakout function of the aggregation nodes 130 with respect to the cache controllers CC 131:
- the breakout function of an aggregation node of layer Li is configured for routing packets destinated to the cache controllers' anycast addressing associated with the layer Li but also packets destinated to the cache controllers' anycast addressing of any and all downstream layers Lj, with j such that 0 < j < i. With such a rule, whenever a cache controller disappears at layer Lj, the corresponding breakout function of aggregation node 130 of layer Lj is reconfigured to stop routing packets through its breakout function but instead sending packet upstream and so on until the packets reach the aggregation node 130 of the layer Li for which the breakout function has been configured for routing packets to an active cache controller CC 131 connected to said aggregation node 130.

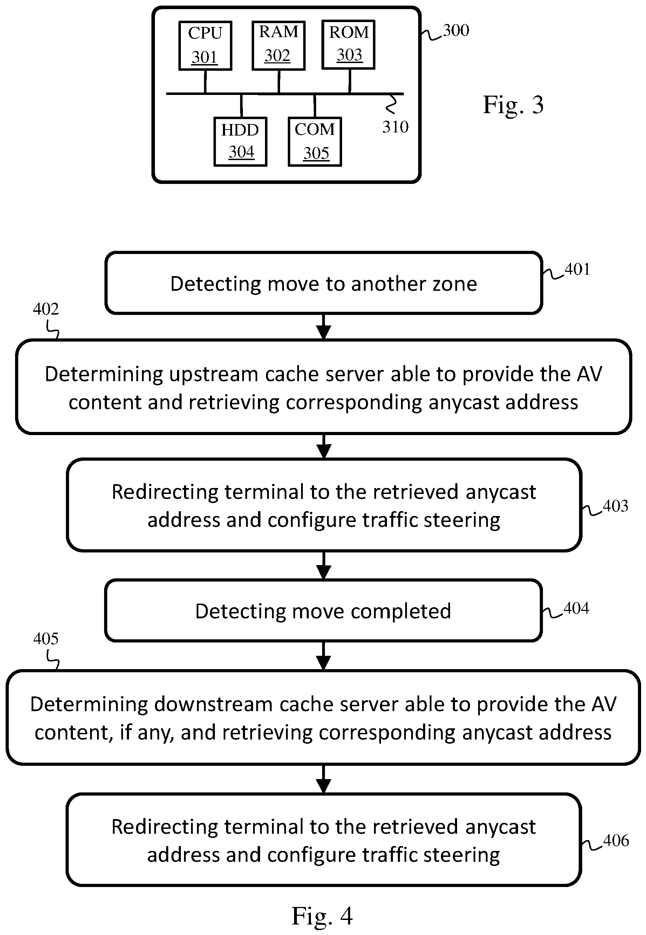

Regarding the delivery of the audio and/or video data, it is assumed that the service continuity is ensured thanks to mobile network's handover and mobility procedures (e.g., 3^{rd} Generation Partnership Project (3GPP) mobility) as long as the mobile terminal remains attached to the same cache server CS 132 during handover. However, ensuring service continuity whenever the mobile terminal switches attachment to another cache server CS 132 during the content delivery session is a matter of the audio and/or video content delivery system 100. In particular, the layer-based anycast addressing introduced above enables smoothly managing service continuity during a session of delivery of an audio and/or video content to a terminal T 150. This aspect is further addressed in details hereinafter with respect to Figs. 4 to 6, as a particular embodiment of use of the layer-based traffic steering configuration disclosed above.

Fig. 3 schematically represents an example of hardware architecture usable in the scope of the audio and/or video content delivery system 100. The example of hardware architecture may be part of devices embedding the cache servers CS 132 and/or be part of a device embedding the orchestrator ORCH 111 and/or be part of devices embedding the cache controllers CC 131 and/or be part of a device embedding the origin server OS 112. Let's generally consider that the example of hardware architecture is part of a communication device 300.

According to the shown architecture, the communication device 300 comprises the following components interconnected by a communications bus 310: a processor, microprocessor, microcontroller or CPU (Central Processing Unit) 301; a RAM (Random-Access Memory) 302; a ROM (Read-Only Memory) 303, such as an EEPROM (Electrically Erasable Programmable ROM), for example a Flash memory; an HDD (Hard-Disk Drive) 304, or any other device adapted to read information stored on a non-transitory storage medium, such an SD (Secure Digital) card reader; and at least one communication interface 305.

CPU 201 is capable of executing instructions loaded into RAM 302 from ROM 303 or from an external memory, such as HDD 304 or an SD card. After the communication device 300 has been powered on, CPU 301 is capable of reading instructions from RAM 302 and executing these instructions. The instructions form one computer program that causes CPU 301 to perform the steps described herein with respect to the communication device in question.

Thus, the steps, behaviors and algorithms described herein may be implemented in software form by executing a set of instructions or program by a programmable computing machine, such as a PC (Personal Computer), a DSP (Digital Signal Processor) or a microcontroller; or else implemented in hardware form by a machine or a dedicated chip or chipset, such as an FPGA (Field-Programmable Gate Array) or an ASIC (Application-Specific Integrated Circuit). Generally speaking, the communication device 300 comprises electronics circuitry adapted and configured for implementing the steps, behaviors and algorithms described herein with respect to the communication device in question.

Fig. 4 schematically represents an algorithm for ensuring audio and/or video content delivery service continuity when a mobile terminal T 150 in view of the mobility of the mobile terminal T 150 in the mobile network. The algorithm of Fig.4 is preferably performed by the orchestrator ORCH 111.

In a step 401, the audio and/or video content delivery system 100 detects that a mobile terminal T 150 has to move away from one zone Zl,p to another zone Zl,q (p ≠ q). For example, the audio and/or video content delivery system 100 is informed by an entity of the mobile network about the location of the mobile terminal T 150. The audio and/or video content delivery system 100 knows the list of zones (Zi,j) and their respective geographical coverage (based on predefined GPS (Global Positioning System) coordinates or a set of identifiers of cells composing the zone in question). When the mobile terminal T 150 moves in such a way it may leave the zone Zl,p, the audio and/or video content delivery system 100 triggers a server switch of cache server CS 132 for continuing delivering an audio and/or video content that said mobile terminal T 150 is currently receiving. When the audio and/or video content delivery system 100 detects the move from one cell to another cell, the audio and/or video content delivery system 100 checks whether it corresponds for the mobile terminal T 150 in question to a change of zone, meaning a change of cache server CS 132 for delivering the audio and/or video content that said mobile terminal T 150 is currently receiving. If there is no change of zone, the mobile terminal T 150 remains anchored to the same cache server CS 132 as previously and the algorithm of Fig. 4 ends; otherwise, the mobile terminal T 150 has to move away from the zone Zl,p to the zone Zl,q (p ≠ q) and a step 402 is performed. It has to be noted that the audio and/or video content delivery system 100 may not know what would be the effective zone Zl,q to which the mobile terminal T 150 in question moves away. In this case, the audio and/or video content delivery system 100 determines in which zones the mobile terminal T 150 in question is subject to move and considers said zones to select an appropriate upstream cache server CS 132 as detailed below.

In a particular embodiment, the audio and/or video content delivery system 100 obtains an identification of the cell in which the mobile terminal T 150 is located from the aggregation nodes 130 of the mobile network, e.g., relying on the MEC-based platforms. For example, the standard ETSI GS MEC 013 V2.1.1 "Multi-access Edge Computing (MEC) Location API" can be used to do so. The audio and/or video content delivery system 100 can thus detect when the mobile terminal T 150 reaches a cell at the border of the zone Zl,p, which means that the mobile terminal T 150 is subject to move to another zone.

In another particular embodiment, the mobile terminal T 150 transmits its GPS coordinates in requests, such as manifest/playlist requests, transmitted to the audio and/or video content delivery system 100. With the GPS coordinates of the mobile terminal T 150, the audio and/or video content delivery system 100 determines whether the mobile terminal T 150 moves and reaches a distance from the border of the zone Z1,p below a predefined threshold, which means that the mobile terminal T 150 is subject to move to another zone.

Manifest or playlist requests are requests to receive in response a manifest, also referred to as playlist depending on the streaming technology in use, which describes how the segments of the audio and/or video content are made available, and in case of adaptive streaming, which describes which representations (qualities) of the audio and/or video content in question are made available. Manifest or playlist requests are frequently or regularly transmitted by mobile terminals during the delivery of an audio and/or video content in order to obtain updated description thereof.

In the step 402, the audio and/or video content delivery system 100 determines an upstream cache server CS 132 able to continue delivering the audio and/or video content to the mobile terminal T 150 in question and to ensure service continuity during the move. The audio and/or video content delivery system 100 searches for an upstream cache server CS 132 that is upstream in the layer-based tree hierarchy with respect to both the cache server CS 132 handling the zone Zl,p (covering the cell in which the mobile terminal T 150 is located before the move) and any of the cache server CS 132 handling a zone Zl,q covering a cell in which the mobile terminal T 150 could likely be located after the move.

In a particular embodiment, when the audio and/or video content delivery system 100 finds a cache server CS 132 that is appropriately located upstream in the layer-based tree hierarchy but that does not currently have the audio and/or video content in cache or that does not yet have rights to cache said audio and/or video content, the audio and/or video content delivery system 100 instructs that the origin server OS 112 feeds the cache server CS 132 in question or that said cache server CS 132 retrieves the audio and/or video content from the origin server OS 112, so that said audio and/or video content becomes available for delivery by the cache server CS 132 in question and that the cache server CS 132 in question has the rights (is permitted) to cache said audio and/or video content. When however the audio and/or video content delivery system 100 determines that the cache server CS 132 shall not have the rights to cache and deliver the audio and/or video content in question, the audio and/or video content delivery system 100 selects another cache server CS 132 upstream.

When selecting the upstream cache server CS 132, the audio and/or video content delivery system 100 may take into account further considerations: server overload or predetermined delivery constraints (latency..

Once the upstream cache server CS 132 that fulfils the requirement above is found, the audio and/or video content delivery system 100 retrieves the corresponding anycast addressing @IPi associated with the layer Li in which the cache server CS 132 in question is located in the layer-based tree hierarchy.

In a step 403, the audio and/or video content delivery system 100 redirects the mobile terminal T 150 in question to the anycast addressing @IPi retrieved in the step 402. For example, the orchestrator ORCH 111 instructs the cache server CS 132 handling the zone Zl,p to redirect the mobile terminal T 150 in question to the anycast addressing @IPi retrieved in the step 402. Consequently, when the cache server CS 132 handling the zone Zl,p receives a subsequent request from the mobile terminal T 150 in question, said cache server CS 132 handling the zone Zl,p responds by sending a redirection message (such as http REDIRECT) indicating a relocation of the audio and/or video content at the anycast addressing @IPi. When the mobile terminal T 150 in question receives the redirection message, it is supposed to reiterate the request (e.g., a manifest/playlist request) using the anycast addressing provided in the redirection message as destination address. The mobile terminal T 150 is then anchored to the cache server CS 132 determined in the step 402 instead of being anchored to the cache server CS 132 handling the zone Zl,p.

Preferably, the audio and/or video content delivery system 100 redirects the mobile terminal T 150 in question in response to a manifest/playlist request received from the mobile terminal T 150 in question. Indeed, in some implementations, if the audio and/or video content delivery system 100 redirects the mobile terminal T 150 in question in response to a segment request, the redirection is limited to the delivery of said segment and no anchoring change is performed, which means that said mobile terminal T 150 would submit a subsequent request to the original CS 132 handling the zone Zl,p, and so on, until the redirection is performed in response to a manifest/play list request. Therefore, if the audio and/or video content delivery system 100 waits for a manifest/playlist request from the mobile terminal T 150 in question to redirect said mobile terminal T 150, then latency and network overhead is improved.

It has to be noted that some low latency technologies for live streaming, such as CTE (Chunked Transfer Encoding) with MPEG CMAF (Common Media Application Format) or LL HLS (Low Latency HLS), enable early playback of audio and/or video contents by particular chunks management that don't need availability of a full segment before starting playback. With such live streaming technologies, the manifest/playlist is requested frequently in order for the mobile terminal's player to refresh the list of available segments. Thus, waiting for a manifest/playlist request from the mobile terminal T 150 in question to redirect said mobile terminal T 150 impacts latency and network overhead in a negligible manner.

Since the upstream cache server CS 132, as determined in the step 402, handles a zone (Zi,j) that includes the zones Zl,p (that covers the source cell) and any potential zone Zl,q (that covers potential surrounding target cell), no service interruption is expected for delivering the audio and/or video content to the mobile terminal T 150 in question. Moreover, in the particular embodiment where the cache server CS 132 handling the zone Zl,p redirects the mobile terminal T 150 in question when responding to a segment request, the redirection toward the upstream cache server CS 132 occurs at segment boundary (no audio and/or video content data loss).

In a step 404, the audio and/or video content delivery system 100 detects that the mobile terminal T 150 in question has stopped moving from the source cell (in the zone Z1,p) and is located in the target cell (in the zone Zl,q). For example, the audio and/or video content delivery system 100 is informed by the aforementioned entity of the mobile network that the handover has been completed.

As mentioned above, in a particular embodiment, the audio and/or video content delivery system 100 obtains an identification of the cell in which the mobile terminal T 150 is located from the aggregation nodes 130 of the mobile network, e.g., relying on the MEC-based platforms. For example, the standard ETSI GS MEC 013 V2.1.1 "Multi-access Edge Computing (MEC) Location API" can be used to do so. The audio and/or video content delivery system 100 can thus detect when the mobile terminal T 150 reaches a cell not at the border of the zone Zl,q, which means that the mobile terminal T 150 is no more subject to move to another zone.

As mentioned above, in another particular embodiment, the mobile terminal T 150 transmits its GPS coordinates in requests, such as manifest/playlist requests, transmitted to the audio and/or video content delivery system 100. With the GPS coordinates of the mobile terminal T 150, the audio and/or video content delivery system 100 determines whether the mobile terminal T 150 moves and reaches a distance from the border of the zone Zl,q above a predefined threshold, which means that the mobile terminal T 150 is no more subject to move to another zone.

In a step 405, the audio and/or video content delivery system 100 determines a downstream cache server CS 132 able to continue delivering the audio and/or video content to the mobile terminal T 150 in question with lower latency. The audio and/or video content delivery system 100 searches for a downstream cache server CS 132 that: (1) is downstream in the layer-based tree hierarchy with respect to the cache server CS 132 to which the mobile terminal T 150 has been redirected in the step 403; (2) handles the zone Zl,q or otherwise a zone that includes the zone Zl,q; and (3) is permitted to stream/cache the related audio and/or video content.

In a particular embodiment, when the audio and/or video content delivery system 100 finds a cache server CS 132 that is appropriately located downstream in the layer-based tree hierarchy but that does not currently have the audio and/or video content in cache or that does not yet have rights to cache said audio and/or video content, the audio and/or video content delivery system 100 instructs that the origin server OS 112 feeds the cache server CS 132 in question, or that said cache server CS 132 retrieves the audio and/or video content from the origin server OS 112, so that said audio and/or video content becomes available for delivery by the cache server CS 132 in question and that the cache server CS 132 in question has the rights to cache said audio and/or video content, and so that the requirement (3) above be fulfilled. This may be triggered when no other cache server CS 132 fulfils all requirements (1), (2) and (3) above, or when any other cache server CS 132 that fulfils all requirements (1), (2) and (3) above is overloaded, or when no other cache server CS 132 that fulfils all requirements (1), (2) and (3) above further meets some predetermined delivery constraints (latency.. Other circumstances may trigger that the audio and/or video content delivery system 100 instructs that the origin server OS 112 feeds the cache server CS 132 in question with the audio and/or video content being delivered to the mobile terminal T 150 in question, or that said cache server CS 132 retrieves the audio and/or video content from the origin server OS 112. When however the audio and/or video content delivery system 100 determines that the cache server CS 132 shall not have the rights to cache and deliver the audio and/or video content in question, the audio and/or video content delivery system 100 selects another cache server CS 132.

Once the downstream cache server CS 132 that fulfils all requirements (1), (2) and (3) is found, if any, the audio and/or video content delivery system 100 retrieves the anycast addressing @IPk associated with the layer Lk (k < i) in which the downstream cache server CS 132 in question is located in the layer-based tree hierarchy.

In a step 406, the audio and/or video content delivery system 100 redirects the mobile terminal T 150 in question to the anycast addressing @IPk retrieved in the step 405. For example, the orchestrator ORCH 111 instructs the cache server CS 132 handling the zone Zl,q (or a zone that includes the zone Zl,q, as explained above) to redirect the mobile terminal T 150 in question to the anycast addressing @IPk retrieved in the step 405. Consequently, when the cache server CS 132 to which the mobile terminal T 150 has been redirected in the step 403 receives a subsequent request from the mobile terminal T 150 in question, said cache server CS 132 responds by sending a redirection message (such as http REDIRECT) indicating a relocation of the audio and/or video content at the anycast addressing @IPk. When the mobile terminal T 150 in question receives the redirection message, it is supposed to reiterate the request (e.g., a manifest/playlist request) using the anycast addressing provided in the redirection message as destination address. The mobile terminal T 150 is then anchored to the downstream cache server CS 132 determined in the step 405 instead of being anchored to the cache server CS 132 determined in the step 402. As explained above, the audio and/or video content delivery system 100 preferably redirects the mobile terminal T 150 in question in response to a manifest/playlist request received from the mobile terminal T 150 in question.

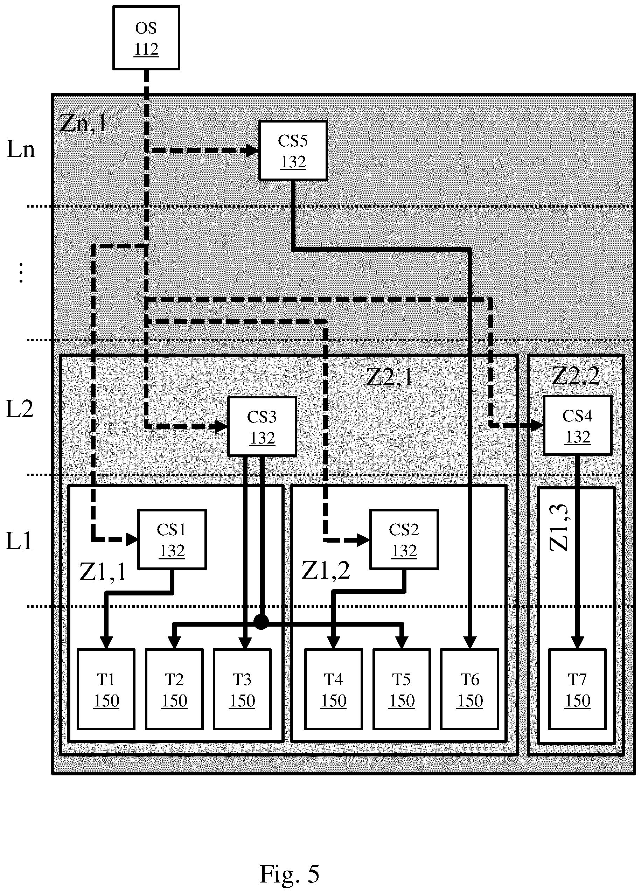

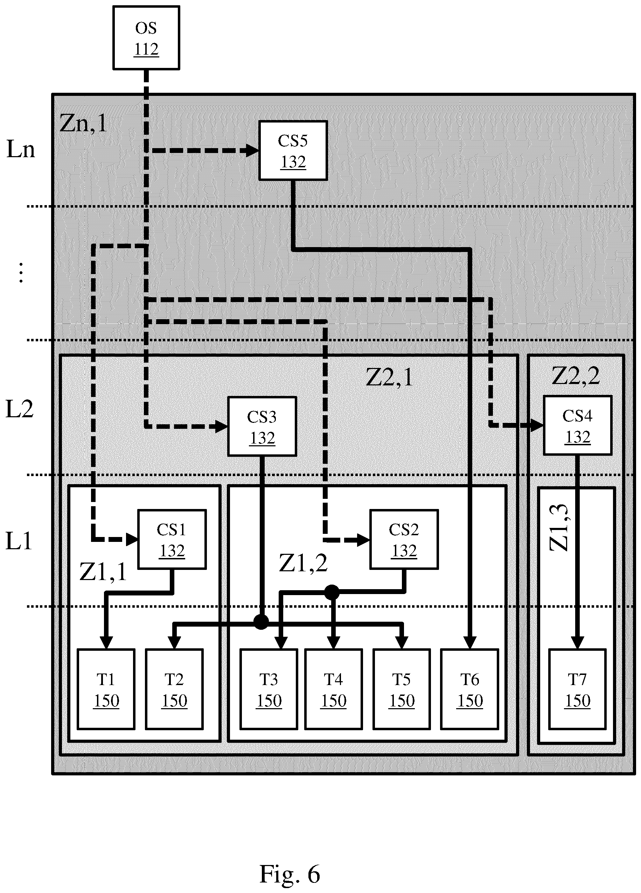

**Figs. 5** **and** **6** illustratively show an example of ensuring service continuity when the mobile terminal T3 150 of Fig. 2 moves from the zone Z1,1 to the zone Z1,2. As disclosed above with respect to Fig. 2, the mobile terminal T3 150 sends segment requests using the anycast addressing @IP1 and traffic steering leads the cache server CS1 132 to deliver the content CT1 to the mobile terminal T3 150. When the audio and/or video content delivery system 100 detects that the mobile terminal T3 150 is subject to undergo a move away from the zone Z1,1, the audio and/or video content delivery system 100 selects the cache server CS3 132 for ensuring service continuity to the mobile terminal T3 150, considering that the cache server CS3 132 is permitted to cache the content CT1. Therefore, as shown in Fig. 5, the mobile terminal T3 150 is redirected (e.g., by the cache server CS1 132 following instructions from the orchestrator ORCH 111) to the anycast addressing @IP2 and traffic steering leads the mobile terminal T3 150 to then request segments of the content CT1 to the cache server CS3 132 instead of requesting them to the cache server CS1 132.The audio and/or video content delivery system 100 is then configured to enable the cache server CS3 132 caching the segments of the content CT1.

Later on, when the audio and/or video content delivery system 100 detects that the mobile terminal T3 150 is not moving anymore, the audio and/or video content delivery system 100 selects, in a particular embodiment, the cache server CS2 132 for reducing latency to serve the mobile terminal T3 150. Therefore, as shown in Fig. 6, the mobile terminal T3 150 is redirected (e.g., by the cache server CS3 132 following instructions from the orchestrator ORCH 111) back to the anycast addressing @IP1. Traffic steering leads the mobile terminal T3 150 to then request segments of the content CT1 to the cache server CS2 132 instead of requesting them to the cache server CS3 132. Service continuity and minimization of service latency is thus ensured. Doing so further enables limiting memory consumption for the mobile terminal T3 150, since redirection to upstream cache servers is minimized and anchoring to cache servers the closest to radio edges is privileged. In a variant, the mobile terminal T3 150 may remain anchored to the cache server CS3 132 for obtaining further segments of the content CT1.

Thus, as disclosed above, layer-based anycast addressing and corresponding traffic steering rules enforced in the aggregation nodes 130 of the mobile network enable ensuring service continuity in a seamless manner for the mobile terminals T 150.

Moreover, as disclosed hereinafter, the anycast addressing and traffic steering rules further enable ensuring service continuity while dynamically modifying deployment of the cache servers CS 132 in the audio and/or video content delivery system 100. In a particular embodiment, the orchestrator ORCH 111 is thus further in charge of activating / deactivating (or instantiating / uninstantiating) cache servers CS 132, and consequently modify the tree hierarchy topology of the audio and/or video content delivery system 100, in order to cope with new load or deployment constraints, potentially with support of the cache controllers CC 131.

In this context, the breakout function of the aggregation nodes 130 may be selectively reconfigured in order to enable activating or inactivating, on-demand, one or more cache servers CS 132 in the audio and/or video content delivery system 100 according to load constraints. Activating or inactivating one or more cache servers CS 132 therefore changes the hierarchical tree topology of the audio and/or video content delivery system 100.

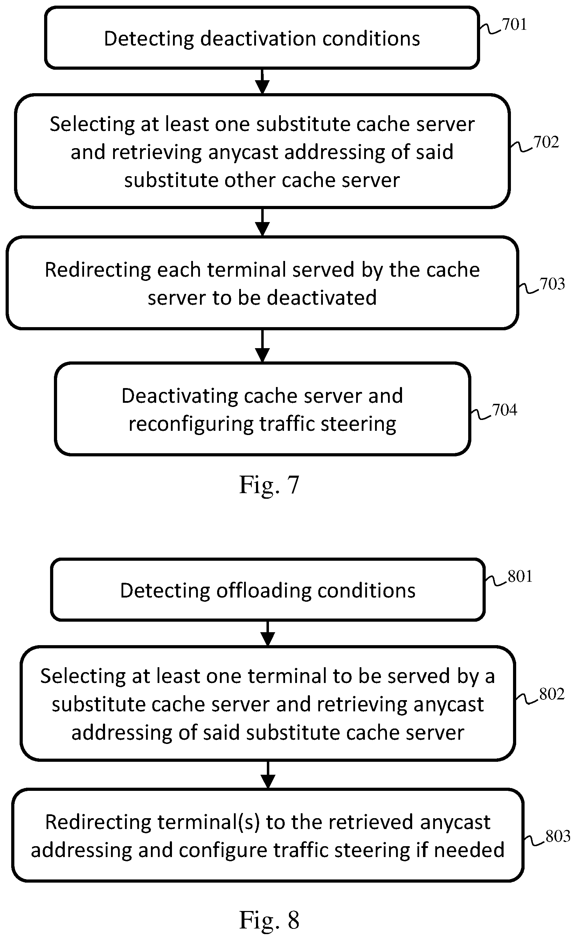

Fig. 7 schematically represents an algorithm for ensuring audio and/or video content delivery service continuity when deactivating a cache server CS 132 in the audio and/or video content delivery system 100. The algorithm of Fig. 7 is preferably performed by the orchestrator ORCH 111.

In a step 701, the audio and/or video content delivery system 100 detects that cache server deactivation conditions are met for a cache server CS 132. For example, a decrease in the quantity of terminals to be simultaneously served leads to a quantity of terminals to be simultaneously served by the cache server CS 132 in question below a predetermined threshold. According to another example, the cache server CS 132 in question has been identified as to be stopped for maintenance considerations.

In a step 702, the audio and/or video content delivery system 100 selects at least one substitute cache server CS 132 for continuing audio and/or video content delivery to each mobile terminal T 150 anchored to the cache server CS 132 for which the deactivation conditions are met. More particularly, the audio and/or video content delivery system 100 may select a different substitute cache server CS 132 for one mobile terminal T 150 to another mobile terminal T 150 (e.g., to perform load balancing or to take into account latency considerations). To do so, for each mobile terminal T 150, the audio and/or video content delivery system 100 determines an upstream cache server CS 132 able to continue delivering the audio and/or video content to the mobile terminal T 150 in question and to ensure service continuity.

In a particular embodiment, when the audio and/or video content delivery system 100 finds a substitute cache server CS 132 that is active in the layer-based tree hierarchy to ensure service continuity (suitable latency...) but that does not currently have the audio and/or video content in question in cache or that does not yet have rights to cache said audio and/or video content, the audio and/or video content delivery system 100 instructs that the origin server OS 112 feeds the substitute cache server CS 132 in question with the audio and/or video content in question, or that said cache server CS 132 retrieves the audio and/or video content from the origin server OS 112, so that said audio and/or video content becomes available for delivery by the cache server CS 132 in question and that the cache server CS 132 in question has the rights to cache said audio and/or video content, or that said cache server CS 132 retrieves the audio and/or video content from the origin server OS 112. When however the audio and/or video content delivery system 100 determines that the cache server CS 132 shall not have the rights to cache and deliver the audio and/or video content in question, the audio and/or video content delivery system 100 selects another cache server CS 132 upstream.

Once a suitable substitute cache server CS 132 is found, the audio and/or video content delivery system 100 retrieves the anycast addressing @IPi associated with the layer Li in which the substitute cache server CS 132 is located in the layer-based tree hierarchy.

In a step 703, the audio and/or video content delivery system 100 redirects each mobile terminal T 150 in question to the anycast addressing @IPi correspondingly retrieved in the step 702. For example, the orchestrator ORCH 111 instructs the cache server CS 132 for which the deactivation conditions are met to redirect each mobile terminal T 150 in question to the anycast addressing @IPi correspondingly retrieved in the step 702. Consequently, when the cache server CS 132 for which the deactivation conditions are met receives a subsequent request from one of said mobile terminal T 150 anchored thereto, said cache server CS 132 responds by sending a redirection message (such as http REDIRECT) indicating a relocation of the audio and/or video content at the anycast addressing @IPi correspondingly retrieved in the step 702. When the mobile terminal T 150 in question receives the redirection message, it is supposed to reiterate the request (e.g., a manifest/playlist request) using the anycast addressing provided in the redirection message as destination address. The mobile terminal T 150 is then anchored to the substitute cache server CS 132 that has been suitably found for ensuring service continuity. As explained above, the audio and/or video content delivery system 100 preferably redirects the mobile terminal T 150 in question in response to a manifest/playlist request received from the mobile terminal T 150 in question.

In a step 704, the audio and/or video content delivery system 100 deactivates the cache server CS 132 for which the deactivation conditions are met, and reconfigures traffic steering in the aggregation node 130 to which said cache server CS 132 was connected, in order to take into account deactivation of said cache server CS 132.

It has to be noted that the algorithm of Fig. 7 is particularly suitable to anchor the mobile terminals T 150, which were anchored to the cache server CS 132 which had to be deactivated, to different cache servers CS 132. Another approach would be to deactivate the cache server CS 132, and all the mobile terminals T 150 anchored thereto are automatically managed by a cache server CS 132 of an upstream layer thanks to the traffic steering rules already explained.

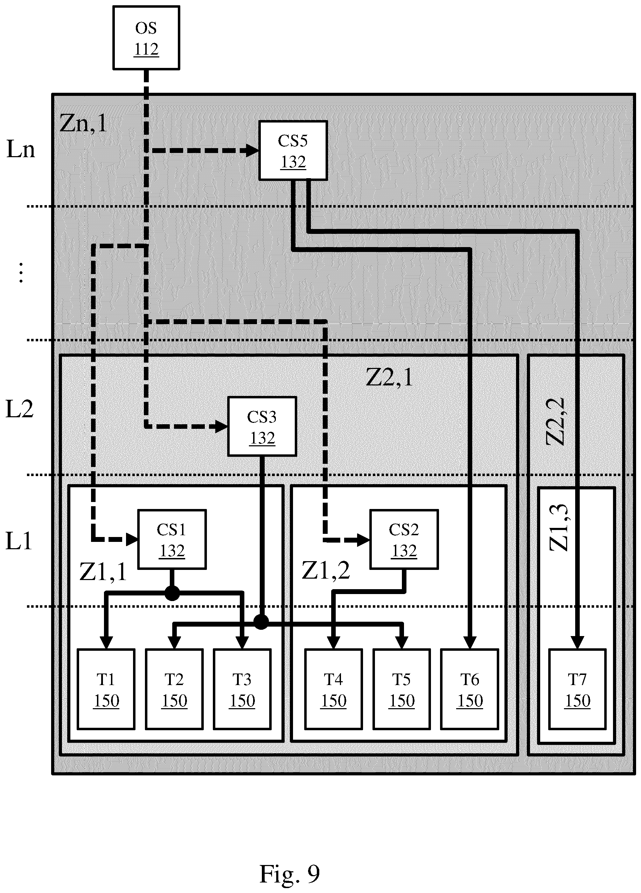

Fig. 9 illustratively shows an example of ensuring service continuity when the audio and/or video content delivery system 100 decides to deactivate the cache server CS4 132 handling the zone Z2,2 (as well as the zone Z1,3 which is included in the zone Z2,2 and which does not include any active cache server CS 132 at that time). Starting from the situation depicted in Fig. 2, the mobile terminal T7 150 obtains segments of the fourth content CT4 from the cache server CS4 132 to be deactivated. To do so, the mobile terminal T7 150 uses the anycast addressing @IP2 as destination address of its segment requests. Before deactivating the cache server CS4 132, the mobile terminal T7 150 is redirected (*e.g*., by the cache server CS4 132 following instructions from the orchestrator ORCH 111) to the anycast addressing @IPn and traffic steering leads the mobile terminal T7 150 to then request segments of the fourth content CT4 to the cache server CS5 132 instead of requesting them to the cache server CS4 132. Considering that the mobile terminal T7 150 was the last terminal anchored to the cache server CS4 132, the cache server CS4 132 can be deactivated, as shown in Fig. 9. Traffic steering of the aggregation node 130 to which is connected the cache server CS4 132 is reconfigured so that the packets with destination address equal to @IP2 are no more captured by its breakout function.

Redirecting mobile terminals T 150 to a substitute cache server CS 132 may also be used for offloading a cache server CS 132 to which said mobile terminals T 150 are anchored.

Fig. 8 schematically represents an algorithm for ensuring audio and/or video content delivery service continuity when offloading a cache server CS 132 in the audio and/or video content delivery system 100.

In a step 801, the audio and/or video content delivery system 100 detects that cache server offloading conditions are met for a cache server CS 132. For example, there is an increase in the quantity of terminals to be simultaneously served by the cache server CS 132 in question which leads to a quantity of terminals T 150 simultaneously served above a predetermined threshold. According to another example, the internal resource usage for the cache server CS 132 in question is above a predetermined threshold.

In a step 802, the audio and/or video content delivery system 100 selects at least one mobile terminal T150, anchored to said cache server CS 132 to be offloaded, which has to be served by a substitute cache server CS 132. For example, the audio and/or video content delivery system 100 offloads all the mobile terminals T 150, which are anchored to said cache server CS 132 to be offloaded and which are served with the same audio and/or video content, toward a substitute cache server CS 132. The audio and/or video content delivery system 100 selects at least one substitute cache server CS 132 for continuing audio and/or video content delivery to each selected mobile terminal T 150. To do so, the audio and/or video content delivery system 100 determines an upstream cache server CS 132 able to continue delivering the audio and/or video content to each mobile terminal T 150 in question and to ensure service continuity.

Once a suitable substitute cache server CS 132 is found, if any, the audio and/or video content delivery system 100 retrieves the anycast addressing @IPi associated with the layer Li in which the substitute cache server CS 132 is located in the layer-based tree hierarchy.

In a step 803, the audio and/or video content delivery system 100 redirects each mobile terminal T 150 in question to the anycast addressing @IPi correspondingly retrieved in the step 802. For example, the orchestrator ORCH 111 instructs the cache server CS 132 for which the offloading conditions are met to redirect each selected mobile terminal T 150 in question to the anycast addressing @IPi correspondingly retrieved in the step 802. Consequently, when the cache server CS 132 for which the offloading conditions are met receives a subsequent request from one of said selected mobile terminals T 150 anchored thereto, said cache server CS 132 responds by sending a redirection message (such as http REDIRECT) indicating a relocation of the audio and/or video content at the anycast addressing @IPi correspondingly retrieved in the step 802. When the mobile terminal T 150 in question receives the redirection message, it is supposed to reiterate the request (typically, a segment request) using the anycast addressing provided in the redirection message as destination address. The mobile terminal T 150 is then anchored to the substitute cache server CS 132 that has been suitably found for ensuring service continuity and the former cache server CS 132 is consequently offloaded.

Moreover, in a particular embodiment, when no cache server CS 132 is activated in a zone Zx,y then traffic addressed to the anycast addressing @IPx is steered to the cache server CS 132 located in the immediately upper layer x+1, namely toward the cache server CS 132 handling the zone Zx+1,w in which the zone Zx,y is included, and further upper when no cache server CS 132 is activated in the zone Zx+1,w. The aggregation node 130 to which the inactive cache server CS 132 of the zone Zx,y is supposed to be connected, as well as the aggregation node 130 to which the active cache server CS 132 of the zone Zx+1,w is connected, are then configured to steer traffic in accordance. Considering the layer-based arrangement of Fig. 2, if the mobile terminal T7 150 transmits requests addressed to the anycast addressing @IP1 (which is supposed to be steered to the cache server CS 132 handling the zone Z1,3), said requests are routed to the cache server CS4 132 which handles the zone Z2,2.

Therefore, when the audio and/or video content delivery system 100 deploys (namely, activates) a cache server CS 132 in the zone Zx,y, each mobile terminal T 150 that uses the anycast addressing @IPx as destination address is automatically handled by the newly deployed (activated) cache server CS 132 in the zone Zx,y instead of the cache server CS 132 in the zone Zx+1,w (or from upper layer if there is no active cache server CS 132 in the zone Zx+1,w). If the newly deployed cache server CS 132 in the zone Zx,y is not authorized to cache that particular audio and/or video content (due e.g. to a lack of popularity), the newly deployed cache server CS 132 may redirect the mobile terminal T 150 in question to the anycast addressing @IPx+1 so that the mobile terminal T 150 be anchored as previously. Traffic steering of involved aggregation nodes 130 is updated in accordance.

In a particular embodiment, a default policy for each new content delivery session engagement for a mobile terminal T 150 is to associate with that session the anycast addressing @IP1. If there is no cache server CS 132 handling the zone Z1,j where the mobile terminal T 150 is located, requests from the mobile terminal T 150 in question are steered to an upper layer where a cache server CS 132 is active. Moreover, if the requests from the mobile terminal T 150 in question reach a cache server CS 132 that does not have the targeted audio and/or video content in cache, said reached cache server CS 132 redirects the mobile terminal T 150 in question to the anycast addressing associated with the immediately upper layer. It simplifies new content delivery session engagement.

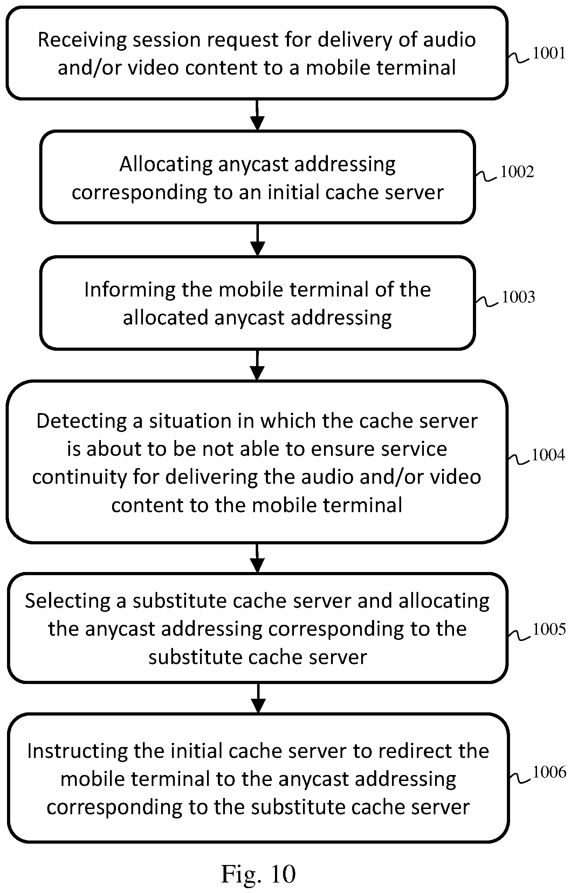

The foregoing disclosure details various situations in which a first cache server CS 132, from which the audio and/or video content is delivered to a mobile terminal T 150 becomes no more able to ensure service continuity. In this case, the audio and/or video content delivery system 100 instructs the first cache server CS 132 to redirect the mobile terminal to the anycast addressing associated with the layer of a second cache server CS 132 that is located upstream in the layer-based hierarchical tree topology with respect to the first cache server. In some situations, as disclosed above, the audio and/or video content delivery system 100 instructs the first cache server CS 132 to redirect the mobile terminal to the anycast addressing associated with the layer of a second cache server CS 132 that is located downstream in the layer-based hierarchical tree topology with respect to the first cache server CS 132. Such situations include a mobile network handover implying a move of the mobile terminal T 150 in question from one zone to another zone which requires a change of cache server anchoring, but are not limited thereto. This is summarized in **Fig. 10****.**

In a step 1001, the audio and/or video content delivery system 100 receives a session request for a mobile terminal T 150, wherein the session request initiates delivery of an audio and/or video content to the mobile terminal T 150 in question. In a particular embodiment, the session request is received from the mobile terminal T 150 and is the very first manifest request or playlist request from this mobile terminal T 150 related to said audio and/or video content.

In a step 1002, the audio and/or video content delivery system 100 allocates, to the mobile terminal T 150, the anycast addressing corresponding to the layer of an initial or first cache server CS 132, from which the audio and/or video content is to be delivered to the mobile terminal T 150, among the cache servers CS 132. It means that the mobile terminal T 150 is expected to use the allocated anycast addressing to further receive the audio and/or video content in question.

In a step 1003, the audio and/or video content delivery system 100 informs the mobile terminal T 150 about the anycast addressing allocated in the step 1002. Typically, the audio and/or video content delivery system 100 informs the mobile terminal T 150 about the allocated anycast addressing, in response to the session request received in the step 1001. Then, the mobile terminal T 150 in question is expected to address requests related to the audio and/or video content to the anycast addressing in question, so that the initial or first cache server CS 132 delivers segments of the audio and/or video content to the mobile terminal T 150.

In a particular embodiment of the steps 1002 and 1003, the session request is addressed to a cache controller CC 131 which in turn informs the mobile terminal T 150 about the anycast addressing of the initial or first cache server CS 132 (which is managed by the cache controller CC 131 in question), so as for the mobile terminal T 150 to obtain the audio and/or video content in question. For example, the cache controller CC 131 sends to the mobile terminal T 150 a redirection message.

In a step 1004, the audio and/or video content delivery system 100 detects a situation in which the first cache server CS 132 is not able to ensure service continuity for delivering the audio and/or video content to the mobile terminal T 150. Such a situation may be a handover in the mobile network which implies a move of the mobile terminal T 150 from one zone to another zone. Such a situation may be an offload of the initial or first cache server CS 132. Such a situation may be a deactivation of the initial or first cache server CS 132.

In a step 1005, the audio and/or video content delivery system 100 selects a substitute or second cache server CS 132 able to ensure service continuity for delivering the audio and/or video content to the mobile terminal T 150 in question. The substitute or second cache server CS 132 is located upstream in the layer-based hierarchical tree topology with respect to the initial or first cache server CS 132, so that the substitute or second cached server CS 132 ensures service continuity for delivering the audio and/or video content to the mobile terminal T 150. In some situations, the substitute or second cache server CS 132 is located downstream in the layer-based hierarchical tree topology with respect to the initial or first cache server CS 132, as disclosed above. The audio and/or video content delivery system 100 then allocates, to the mobile terminal T 150, the anycast addressing corresponding to the layer of the substitute or second cache server CS 132, from which the audio and/or video content is now to be delivered to the mobile terminal T 150.

In a step 1006, the audio and/or video content delivery system 100 instructs the initial or first cache server CS 132 to redirect the mobile terminal T 150 to the anycast addressing associated with the layer of the substitute or second cache server CS 132. Consequently, the initial or first cache server CS 132 redirects the mobile terminal T 150 to the anycast addressing associated with the layer of the substitute or second cache server CS 132, preferably when responding to a manifest or playlist request. Then, the mobile terminal T 150 in question is expected to address further requests related to the audio and/or video content to the anycast addressing in question, so that the substitute or second cache server CS 132 delivers segments of the audio and/or video content to the mobile terminal T 150.

In order to manage situations in which a cache server CS 132 becomes no more able (for example, because the cache server CS 132 is no more permitted to continue delivering the audio and/or video content due to lack of audience in its zone) to ensure service continuity for delivering an audio and/or video content to a mobile terminal T 150, traffic steering is configured adequately so that the audio and/or video content delivery can be automatically handled by another cache server CS 132 thanks to the anycast addressing in place and appropriate configuration of the breakout function of the aggregation nodes 130. As a reminder, the breakout function of an aggregation node of layer Li is configured for routing packets destinated to the anycast addressing @IPi associated with the layer Li but also packets destinated to the anycast addressing @IPj with j such that 0 < j < i. With such a rule, whenever a cache server CS 132 disappears at layer Lj, the corresponding breakout function of aggregation node 130 of layer Lj is reconfigured to stop routing packets through its breakout function but instead sending packet upstream and so on until the packets reach the aggregation node 130 of the layer Li for which the breakout function has been configured for routing packets to the corresponding cache server CS 132 via its breakout function. As already disclosed above, such traffic steering configuration enables service continuity especially when the cache server CS 132 of layer Lj disappears, since the requests are then handled by an upstream cache server CS 132 (e.g., of layer Li) although the requests in question remain addressed to the anycast address @IPj. It has to be further noted that if a cache server CS 132 is later on reactivated at the layer Lj, the requests in question are then handled by the newly reactivated cache server CS 132 instead of continuing to be handled by said upstream cache server CS 132. All these switches of cache server anchoring are thus automatically performed.

## Claims

1. A method for delivering an audio and/or video content to a mobile terminal (150) by an audio and/or video content delivery system (100) deployed on top of a mobile network, wherein the audio and/or video content delivery system (100) comprises plural cache servers (132), the cache servers (132) are arranged using a layer-based hierarchical tree topology, the cache servers (132) are connected to respective aggregation nodes (130) of the mobile network such that a configurable breakout function of the aggregation nodes (130) enables routing to the cache servers (132) packets addressed to an anycast addressing associated with the cache servers (132), wherein each layer of the layer-based hierarchical tree topology is associated with an anycast addressing so that each layer of the layer-based hierarchical tree topology has a dedicated anycast addressing, and wherein the method comprises:
- Allocating (1002) to the mobile terminal (150) the anycast addressing corresponding to the layer of a first cache server (132), from which the audio and/or video content is to be delivered to the mobile terminal (150), among the cache servers (132),
and wherein the method further comprises:
- Configuring traffic steering addressed to the anycast addressing associated with a layer by configuring the configurable breakout function of the aggregation node (130) connected to an active cache server (132) of said layer so as to route the traffic addressed to the anycast addressing associated with said layer to the active cache server (132); and
- Further configuring traffic steering addressed to the anycast addressing associated with any and all downstream layers, with respect to the layer of the active cache server, by configuring the configurable breakout function of the aggregation node connected with said active cache server (132) so as to also route the traffic addressed to the anycast addressing associated with said any and all downstream layers to the active cache server (132), so that when the first cache server (132) is not able to ensure service continuity for delivering the audio and/or video content to the mobile terminal (150), said service continuity is automatically ensured by a second cache server (132) located upstream in the layer-based hierarchical tree topology with respect to the first cache server (132), wherein the second cache server (132) is the active cache server (132).

2. The method according to claim 1, wherein the method comprises:
- Upon detecting (1004) a situation in which the first cache server (132) is not able to ensure service continuity for delivering the audio and/or video content to the mobile terminal (150), instructing (1005) the first cache server (132) to redirect the mobile terminal (150) to the anycast addressing associated with the layer of the second cache server (132).

3. The method according to claim 2, wherein the method comprises:
- detecting (401) that the mobile terminal (150) has to undergo a handover from a source cell in a first zone handled by the first cache server (132), to a target cell in a second zone handled by a third cache server (132);
- determining (402) the second cache as a cache server (132) able to provide the audio and/or video content to the mobile terminal (150), the second cache server (132) being located upstream in the layer-based hierarchical tree topology with respect to the first cache server (132) and the third cache server (132), and retrieving the anycast addressing associated with the layer in which the second cache server (132) is located so as to redirect (403) the mobile terminal (150) to the anycast addressing associated with the second cache server (132).

4. The method according to claim 3, wherein the method comprises:
- upon detecting (404) that the mobile terminal (150) has moved from the first zone to the second zone, redirecting (406) the mobile terminal (150) to the anycast addressing associated with the third cache server (132) handling the second zone.

5. The method according to claim 4, wherein redirecting (406) the mobile terminal (150) to the anycast addressing associated with the third cache server (132) is performed by the second cache server (132) in response to a manifest request or playlist request received from the mobile terminal (150) with respect to the audio and/or video content.

6. The method according to any one of claims 2 to 5, wherein redirecting (403) the mobile terminal (150) to the anycast addressing associated with the second cache server (132) is performed by the first cache server in response to a manifest request or playlist request received from the mobile terminal (150) with respect to the audio and/or video content.

7. The method according to any one of claims 1 to 6, wherein traffic steering is configured by an orchestrator (111) of the audio and/or video content delivery system (100), and when the mobile terminal (150) has to be redirected, the orchestrator (111) further instructs the cache server, to which is the mobile terminal is anchored, to redirect the mobile terminal (150) and provides information indicating to which anycast addressing the mobile terminal (150) has to be redirected.

8. The method according to any one of claims 1 to 7, wherein the audio and/or video content delivery system (100) comprises cache controllers (131) respectively managing the cache servers (132), the cache controllers (131) are connected to respective aggregation nodes (130) of the mobile network such that the configurable breakout function of the aggregation nodes (130) enables routing to the cache controllers (131) packets addressed to another anycast addressing associated on a per-layer basis with the cache controllers (131).

9. The method according to claim 8, wherein the method comprises:
- Upon receiving (1001), for the mobile terminal (150), a session request requesting delivery of the audio and/or video content, a cache controller (131) allocates (1002) to the mobile terminal (150) the anycast addressing corresponding to the layer of the first cache server (132),

10. The method according to any one of claims 1 to 9, comprising:
- detecting that deactivation conditions are met for one said cache server (132), referred to as cache server to be deactivated;
- selecting at least one substitute cache server (132) for continuing audio and/or video content delivery to each mobile terminal anchored to the cache server to be deactivated;
- determining, for each mobile terminal anchored to the cache server to be deactivated, a substitute cache server (132) which is located upstream or downstream in the layer-based hierarchical tree topology with respect to the cache server to be deactivated, and which is able to continue delivering the audio and/or video content to the mobile terminal in question, and retrieving the anycast addressing associated with the layer in which the substitute cache server (132) is located;
- redirecting, to the retrieved anycast addressing, each mobile terminal which is anchored to the cache server to be deactivated; and
- deactivating the cache server to be deactivated.

11. The method according to any one of claims 1 to 10, comprising:
- detecting that offloading conditions are met for one said cache server (132), referred to as cache server to be offloaded;
- selecting at least one terminal, anchored to the cache server to be offloaded, which has to be served by a substitute cache server (132);
- retrieving the anycast addressing associated with the layer in which the substitute cache server (132) is located;
- redirecting, to the retrieved anycast addressing, each mobile terminal which is anchored to the cache server to be offloaded; and
- deactivating the cache server to be offloaded.

12. A computer program product comprising instructions causing execution of the method according to any one of claims 1 to 11 when said instructions are run by a processor.

13. An information storage medium storing instructions causing execution of the method according to any one of claims 1 to 11 when said instructions are read from the information storage medium and run by a processor.

14. An audio and/or video content delivery system (100) for delivering an audio and/or video content to a mobile terminal (150), the audio and/or video content delivery system (100) being intended to be deployed on top of a mobile network, wherein the audio and/or video content delivery system (100) comprises plural cache servers (132), the cache servers (132) are arranged using a layer-based hierarchical tree topology, the cache servers (132) are connected to respective aggregation nodes (130) of the mobile network such that a configurable breakout function of the aggregation nodes (130) enables routing to the cache servers (132) packets addressed to an anycast addressing associated with the cache servers (132),
wherein each layer of the layer-based hierarchical tree topology is associated with an anycast addressing so that each layer of the layer-based hierarchical tree topology has a dedicated anycast addressing, and wherein the audio and/or video content delivery system comprises electronic circuitry configured for:
- Allocating (1002) to the mobile terminal (150) the anycast address corresponding to the layer of a first cache server (132), from which the audio and/or video content is to be delivered to the mobile terminal (150), among the cache servers (132),
and wherein the electronic circuitry is further configured for:
- Configuring traffic steering addressed to the anycast addressing associated with a layer by configuring the configurable breakout function of the aggregation node (130) connected to an active cache server (132) of said layer so as to route the traffic addressed to the anycast addressing associated with said layer to the active cache server (132); and
- Further configuring traffic steering addressed to the anycast addressing associated with any and all downstream layers, with respect to the layer of the active cache server, by configuring the configurable breakout function of the aggregation node connected with said active cache server (132) so as to also route the traffic addressed to the anycast addressing associated with said any and all downstream layers to the active cache server (132), so that when the first cache server (132) is not able to ensure service continuity for delivering the audio and/or video content to the mobile terminal (150), said service continuity is automatically ensured by a second cache server (132) located upstream in the layer-based hierarchical tree topology with respect to the first cache server (132), wherein the second cache server (132) is the active cache server (132).

## Patentansprüche

1. Verfahren zur Bereitstellung eines Audio- und/oder Videoinhalts für ein mobiles Endgerät (150) durch ein Audio- und/oder Videoinhaltsbereitstellungssystem (100), das auf einem Mobilfunknetzwerk eingesetzt wird, wobei das Audio- und/oder Videoinhaltsbereitstellungssystem (100) mehrere Cache-Server (132) umfasst, die Cache-Server (132) unter Verwendung einer schichtbasierten hierarchischen Baumtopologie angeordnet sind und die Cache-Server (132) mit jeweiligen Aggregationsknoten (130) des Mobilfunknetzwerks verbunden sind, sodass eine konfigurierbare Breakout-Funktion der Aggregationsknoten (130) Routing von Paketen, die an eine Anycast-Adressierung adressiert sind, die den Cache-Servern (132) zugeordnet ist, zu den Cache-Servern (132) ermöglicht,
wobei jede Schicht der schichtbasierten hierarchischen Baumtopologie einer Anycast-Adressierung zugeordnet ist, sodass jede Schicht der schichtbasierten hierarchischen Baumtopologie eine dedizierte Anycast-Adressierung aufweist, und wobei das Verfahren Folgendes umfasst:
- Zuweisen (1002) der Anycast-Adressierung zum mobilen Endgerät (150), die der Schicht eines ersten Cache-Servers (132) unter den Cache-Servern (132) entspricht, von dem der Audio- und/oder Videoinhalt für das mobile Endgerät (150) bereitgestellt werden soll, und wobei das Verfahren ferner umfasst:
- Konfigurieren von Verkehrslenkung, die an die Anycast-Adressierung adressiert ist, die einer Schicht zugeordnet ist, durch Konfigurieren der konfigurierbaren Breakout-Funktion des Aggregationsknotens (130), der mit einem aktiven Cache-Server (132) der Schicht verbunden ist, um den Verkehr, der an die der Schicht zugeordnete Anycast-Adressierung adressiert ist, zum aktiven Cache-Server (132) zu leiten; und
- ferner Konfigurieren von Verkehrslenkung, die an die Anycast-Adressierung adressiert ist, die einer oder allen Downstream-Schichten in Bezug auf die Schicht des aktiven Cache-Servers zugeordnet ist, durch Konfigurieren der konfigurierbaren Breakout-Funktion des Aggregationsknotens, der mit dem aktiven Cache-Server (132) verbunden ist, um auch den Verkehr, der an die Anycast-Adressierung adressiert ist, die der einen oder allen Downstream-Schichten zugeordnet ist, zum aktiven Cache-Server (132) zu leiten, sodass, wenn der erste Cache-Server (132) nicht in der Lage ist, Dienstkontinuität zum Bereitstellen des Audio- und/oder Videoinhalts für das mobile Endgerät (150) zu gewährleisten, die Dienstkontinuität automatisch durch einen zweiten Cache-Server (132) gewährleistet wird, der in der schichtbasierten hierarchischen Baumtopologie in Bezug auf den ersten Cache-Server (132) vorgeschaltet angeordnet ist, wobei der zweite Cache-Server (132) der aktive Cache-Server (132) ist.

2. Verfahren nach Anspruch 1, wobei das Verfahren Folgendes umfasst:
- bei Erkennen (1004) einer Situation, in der der erste Cache-Server(132) nicht in der Lage ist, die Dienstkontinuität zum Bereitstellen des Audio- und/oder Videoinhalts für das mobile Endgerät (150) zu gewährleisten, Anweisen (1005) des ersten Cache-Servers (132), das mobile Endgerät (150) zu der Anycast-Adressierung umzuleiten, die der Schicht des zweiten Cache-Servers (132) zugeordnet ist.

3. Verfahren nach Anspruch 2, wobei das Verfahren Folgendes umfasst:
- Erkennen (401), dass das mobile Endgerät (150) einem Handover von einer Quellzelle in einer ersten Zone, die vom ersten Cache-Server (132) bedient wird, in eine Zielzelle in einer zweiten Zone zu unterziehen ist, die von einem dritten Cache-Server (132) bedient wird;
- Bestimmen (402) des zweiten Cache als Cache-Server (132), der in der Lage ist, den Audio- und/oder Videoinhalt an das mobile Endgerät (150) zu übermitteln, wobei der zweite Cache-Server (132) in der schichtbasierten hierarchischen Baumtopologie in Bezug auf den ersten Cache-Server (132) und den dritten Cache-Server (132) vorgeschaltet angeordnet ist, und Abrufen der Anycast-Adressierung, die der Schicht zugeordnet ist, in der sich der zweite Cache-Server (132) befindet, um das mobile Endgerät (150) zu der dem zweiten Cache-Server (132) zugeordneten Anycast-Adressierung umzuleiten (403) .

4. Verfahren nach Anspruch 3, wobei das Verfahren Folgendes umfasst:
- bei Erkennen (404), dass sich das mobile Endgerät (150) von der ersten Zone in die zweite Zone bewegt hat, Umleiten (406) des mobilen Endgeräts (150) zu der Anycast-Adressierung, die dem dritten Cache-Server (132) zugeordnet ist, der die zweite Zone bedient.

5. Verfahren nach Anspruch 4, wobei das Umleiten (406) des mobilen Endgeräts (150) zu der dem dritten Cache-Server (132) zugeordneten Anycast-Adressierung vom zweiten Cache-Server (132) in Reaktion auf eine Manifest-Anforderung oder eine Playlist-Anforderung durchgeführt wird, die vom mobilen Endgerät (150) in Bezug auf den Audio- und/oder Videoinhalt empfangen wird.

6. Verfahren nach einem der Ansprüche 2 bis 5, wobei das Umleiten (403) des mobilen Endgeräts (150) zu der dem zweiten Cache-Server (132) zugeordneten Anycast-Adressierung vom ersten Cache-Server in Reaktion auf eine Manifest-Anforderung oder eine Playlist-Anforderung durchgeführt wird, die vom mobilen Endgerät (150) in Bezug auf den Audio- und/oder Videoinhalt empfangen wird.

7. Verfahren nach einem der Ansprüche 1 bis 6, wobei die Verkehrslenkung von einem orchestrator (111) des Audio- und/oder Videoinhaltsbereitstellungssystems (100) konfiguriert wird und, wenn das mobile Endgerät (150) umgeleitet werden muss, der Orchestrator (111) ferner den Cache-Server, an dem das mobile Endgerät verankert ist, anweist, das mobile Endgerät (150) umzuleiten, und Informationen übermittelt, die angeben, zu welcher Anycast-Adressierung das mobile Endgerät (150) umgeleitet werden muss.

8. Verfahren nach einem der Ansprüche 1 bis 7, wobei das Audio- und/oder Videoinhaltsbereitstellungssystem (100) Cache-Steuerungen (131) umfasst, die jeweils die Cache-Server (132) steuern, wobei die Cache-Steuerungen (131) mit jeweiligen Aggregationsknoten (130) des Mobilfunknetzwerks verbunden sind, sodass die konfigurierbare Breakout-Funktion der Aggregationsknoten (130) Routing von Paketen, die an eine andere Anycast-Adressierung adressiert sind, die auf einer Pro-Schicht-Basis den Cache-Steuerungen (131) zugeordnet ist, zu den Cache-Steuerungen (131) ermöglicht.

9. Verfahren nach Anspruch 8, wobei das Verfahren umfasst, dass:
- bei Empfangen (1001) einer Sitzungsanforderung für das mobile Endgerät (150), die die Bereitstellung des Audio- und/oder Videoinhalts anfordert, eine Cache-Steuerung (131) dem mobilen Endgerät (150) die Anycast-Adressierung zuweist (1002), die der Schicht des ersten Cache-Servers (132) entspricht.

10. Verfahren nach einem der Ansprüche 1 bis 9, umfassend:
- Erkennen, dass Deaktivierungsbedingungen für einen der Cache-Server (132) erfüllt sind, der als zu deaktivierender Cache-Server bezeichnet wird;
- Auswählen mindestens eines Ersatz-Cache-Servers (132), um mit der Audio- und/oder Videoinhaltsbereitstellung für jedes mobile Endgerät fortzufahren, das an dem zu deaktivierenden Cache-Server verankert ist;
- Bestimmen eines Ersatz-Cache-Servers (132), der basierend auf der hierarchischen Baumtopologie in der Schicht in Bezug auf den zu deaktivierenden Cache-Server vor- oder nachgeschaltet angeordnet ist und der dazu in der Lage ist, mit dem Bereitstellen des Audio- und/oder Videoinhalts für das betreffende mobile Endgerät fortzufahren, für jedes mobile Endgerät, das an dem zu deaktivierenden Cache-Server verankert ist, und Abrufen der Anycast-Adressierung, die der Schicht zugeordnet ist, in der sich der Ersatz-Cache-Server (132) befindet ist;
- Umleiten jedes mobilen Endgeräts, das an dem zu deaktivierenden Cache-Server verankert ist, zu der abgerufenen Anycast-Adressierung; und
- Deaktivieren des zu deaktivierenden Cache-Servers.

11. Verfahren nach einem der Ansprüche 1 bis 10, umfassend:
- Erkennen, dass Auslagerungsbedingungen für einen der Cache-Server (132) erfüllt sind, der als auszulagernder Cache-Server bezeichnet wird;
- Auswählen mindestens eines Endgeräts, das an dem auszulagernden Cache-Server verankert ist und das von einem Ersatz-Cache-Server (132) bedient werden muss;
- Abrufen der Anycast-Adressierung, die der Schicht zugeordnet ist, in der sich der Ersatz-Cache-Server (132) befindet;
- Umleiten jedes mobilen Endgeräts, das an dem auszulagernden Cache-Server verankert ist, zu der abgerufenen Anycast-Adressierung; und
- Deaktivieren des auszulagernden Cache-Servers.

12. Computerprogrammprodukt, umfassend Anweisungen, die die Ausführung des Verfahrens nach einem der Ansprüche 1 bis 11 veranlassen, wenn die Anweisungen von einem Prozessor ausgeführt werden.

13. Informationsspeichermedium, das Anweisungen speichert, die die Ausführung des Verfahrens nach einem der Ansprüche 1 bis 11 veranlassen, wenn die Anweisungen von einem Prozessor aus dem Informationsspeichermedium ausgelesen und ausgeführt werden.

14. Audio- und/oder Videoinhaltsbereitstellungssystem (100) zum Bereitstellen eines Audio- und/oder Videoinhalts für ein mobiles Endgerät (150), wobei das Audio- und/oder Videoinhaltsbereitstellungssystem (100) dazu bestimmt ist, auf einem Mobilfunknetzwerk eingesetzt zu werden, wobei das Audio- und/oder Videoinhaltsbereitstellungssystem (100) mehrere Cache-Server (132) umfasst, die Cache-Server (132) unter Verwendung einer schichtbasierten hierarchischen Baumtopologie angeordnet sind und die Cache-Server (132) mit jeweiligen Aggregationsknoten (130) des Mobilfunknetzwerks verbunden sind, sodass eine konfigurierbare Breakout-Funktion der Aggregationsknoten (130) Routing von Paketen, die an eine den Cache-Servern (132) zugeordnete Anycast-Adressierung adressiert sind, zu den Cache-Servern (132) ermöglicht,
wobei jede Schicht der schichtbasierten hierarchischen Baumtopologie einer Anycast-Adressierung zugeordnet ist, sodass jede Schicht der schichtbasierten hierarchischen Baumtopologie eine dedizierte Anycast-Adressierung aufweist, und wobei das Audio- und/oder Videoinhaltsbereitstellungssystem eine elektronische Schaltungsanordnung umfasst, die konfiguriert ist zum:
- Zuweisen (1002) der Anycast-Adresse zum mobilen Endgerät (150), die der Schicht eines ersten Cache-Servers (132) unter den Cache-Servern (132) entspricht, von dem der Audio- und/oder Videoinhalt für das mobile Endgerät (150) bereitgestellt werden soll,
und wobei die elektronische Schaltungsanordnung ferner konfiguriert ist zum:
- Konfigurieren von Verkehrslenkung, die an die Anycast-Adressierung adressiert ist, die einer Schicht zugeordnet ist, durch Konfigurieren der konfigurierbaren Breakout-Funktion des Aggregationsknotens (130), der mit einem aktiven Cache-Server (132) der Schicht verbunden ist, um den Verkehr, der an die Anycast-Adressierung adressiert ist, die der Schicht zugeordnet ist, zum aktiven Cache-Server (132) zu leiten; und
- ferner Konfigurieren von Verkehrslenkung, die an die Anycast-Adressierung adressiert ist, die einer oder allen Downstream-Schichten in Bezug auf die Schicht des aktiven Cache-Servers zugeordnet ist, durch Konfigurieren der konfigurierbaren Breakout-Funktion des Aggregationsknotens, der mit dem aktiven Cache-Server (132) verbunden ist, um auch den Verkehr, der an die Anycast-Adressierung adressiert ist, die der einen oder allen Downstream-Schichten zugeordnet ist, zum aktiven Cache-Server (132) zu leiten, sodass, wenn der erste Cache-Server (132) nicht in der Lage ist, Dienstkontinuität zum Bereitstellen des Audio- und/oder Videoinhalts für das mobile Endgerät (150) zu gewährleisten, die Dienstkontinuität automatisch durch einen zweiten Cache-Server (132) gewährleistet wird, der in der schichtbasierten hierarchischen Baumtopologie in Bezug auf den ersten Cache-Server (132) vorgeschaltet angeordnet ist, wobei der der zweite Cache-Server (132) der aktive Cache-Server (132) ist.

## Revendications

1. Procédé de diffusion d'un contenu audio et/ou vidéo vers un terminal mobile (150) par un système de diffusion de contenu audio et/ou vidéo (100) déployé par-dessus un réseau mobile, dans lequel le système de diffusion de contenu audio et/ou vidéo (100) comprend plusieurs serveurs caches (132), les serveurs caches (132) sont agencés selon une topologie arborescente hiérarchique à base de couches, les serveurs caches (132) sont connectés à des noeuds d'agrégation respectifs (130) du réseau mobile de telle sorte qu'une fonction de dérivation configurable des noeuds d'agrégation (130) permette le routage vers les serveurs caches (132) de paquets adressés à un adressage d'envoi à la cantonade associé aux serveurs caches (132), dans lequel chaque couche de la topologie arborescente hiérarchique à base de couches est associée à un adressage d'envoi à la cantonade de telle sorte que chaque couche de la topologie arborescente hiérarchique à base de couches ait un adressage d'envoi à la cantonade dédié, et le procédé comprenant :
- l'attribution (1002) au terminal mobile (150) de l'adressage d'envoi à la cantonade correspondant à la couche d'un premier serveur cache (132), à partir duquel le contenu audio et/ou vidéo doit être diffusé vers le terminal mobile (150), parmi les serveurs caches (132), et le procédé comprenant en outre :
- la configuration d'une orientation de trafic adressée à l'adressage d'envoi à la cantonade associé à une couche en configurant la fonction de dérivation configurable du noeud d'agrégation (130) connecté à un serveur cache actif (132) de ladite couche de manière à router le trafic adressé à l'adressage d'envoi à la cantonade associé à ladite couche vers le serveur cache actif (132) ; et
- la configuration en outre d'une orientation de trafic adressée à l'adressage d'envoi à la cantonade associé à l'une quelconque de couches en aval ou à toutes, par rapport à la couche du serveur cache actif, en configurant la fonction de dérivation configurable du noeud d'agrégation connecté audit serveur cache actif (132) de manière à router également le trafic adressé à l'adressage d'envoi à la cantonade associé à ladite couche en aval vers lesdites une quelconque des couches en aval ou toutes vers le serveur cache actif (132), de telle sorte que, lorsque le premier serveur cache (132) n'est pas en mesure d'assurer la continuité de service pour la diffusion du contenu audio et/ou vidéo vers le terminal mobile (150), ladite continuité de service soit automatiquement assurée par un deuxième serveur cache (132) situé en amont dans la topologie arborescente hiérarchique à base de couches par rapport au premier serveur cache (132), dans lequel le deuxième serveur cache (132) est le serveur cache actif (132).

2. Procédé selon la revendication 1, le procédé comprenant :
- À la détection (1004) d'une situation dans laquelle le premier serveur cache (132) n'est pas en mesure d'assurer la continuité de service pour la diffusion du contenu audio et/ou vidéo vers le terminal mobile (150), l'instruction (1005) au premier serveur cache (132) de rediriger le terminal mobile (150) vers l'adressage d'envoi à la cantonade associé à la couche du deuxième serveur cache (132).

3. Procédé selon la revendication 2, le procédé comprenant :
- la détection (401) que le terminal mobile (150) doit faire l'objet d'un transfert d'une cellule source dans une première zone gérée par le premier serveur cache (132) à une cellule cible dans une seconde zone gérée par un troisième serveur cache (132) ;
- la détermination (402) du deuxième cache en tant que serveur cache (132) capable de fournir le contenu audio et/ou vidéo au terminal mobile (150), le deuxième serveur cache (132) étant situé en amont dans la topologie arborescente hiérarchique à base de couches par rapport au premier serveur cache (132) et au troisième serveur cache (132), et la récupération de l'adressage d'envoi à la cantonade associé à la couche dans laquelle se trouve le deuxième serveur cache (132) afin de rediriger (403) le terminal mobile (150) vers l'adressage d'envoi à la cantonade associé au deuxième serveur cache (132).

4. Procédé selon la revendication 3, le procédé comprenant :
- à de la détection (404) que le terminal mobile (150) s'est déplacé de la première zone à la deuxième zone, la redirection (406) du terminal mobile (150) vers l'adressage d'envoi à la cantonade associé au troisième serveur cache (132) qui gère la seconde zone.

5. Procédé selon la revendication 4, dans lequel la redirection (406) du terminal mobile (150) vers l'adressage d'envoi à la cantonade associé au troisième serveur cache (132) est réalisée par le deuxième serveur cache (132) en réponse à une demande de manifeste ou à une demande de liste de lecture reçue à partir du terminal mobile (150) relativement au contenu audio et/ou vidéo.

6. Procédé selon l'une quelconque des revendications 2 à 5, dans lequel la redirection (403) du terminal mobile (150) vers l'adressage d'envoi à la cantonade associé au deuxième serveur cache (132) est réalisée par le premier serveur cache en réponse à une demande de manifeste ou à une demande de liste de lecture reçue à partir du terminal mobile (150) relativement au contenu audio et/ou vidéo.

7. Procédé selon l'une quelconque des revendications 1 à 6, dans lequel l'orientation de trafic est configurée par un orchestrateur (111) du système de diffusion de contenu audio et/ou vidéo (100), et lorsque le terminal mobile (150) doit être redirigé, l'orchestrateur (111) donne des instructions supplémentaires au serveur cache, sur lequel est ancré le terminal mobile, pour rediriger le terminal mobile (150) et fournit des informations indiquant vers quel adressage d'envoi à la cantonade le terminal mobile (150) doit être redirigé.

8. Procédé selon l'une quelconque des revendications 1 à 7, dans lequel le système de diffusion de contenu audio et/ou vidéo (100) comprend des contrôleurs de cache (131) qui gèrent respectivement les serveurs caches (132), les contrôleurs de cache (131) sont connectés à des noeuds d'agrégation respectifs (130) du réseau mobile de telle sorte que la fonction de dérivation configurable des noeuds d'agrégation (130) permette le routage vers les contrôleurs de cache (131) des paquets adressés à un autre adressage d'envoi à la cantonade associé couche par couche aux contrôleurs de cache (131).

9. Procédé selon la revendication 8, le procédé comprenant :
- À la réception (1001), pour le terminal mobile (150), d'une demande de session demandant la diffusion du contenu audio et/ou vidéo, un contrôleur de cache (131) attribue (1002) au terminal mobile (150) l'adressage d'envoi à la cantonade correspondant à la couche du premier serveur cache (132).

10. Procédé selon l'une quelconque des revendications 1 à 9, comprenant :
- la détection que des conditions de désactivation sont satisfaites pour un dit serveur cache (132), dénommé serveur cache à désactiver ;
- la sélection d'au moins un serveur cache de substitution (132) pour continuer la diffusion de contenu audio et/ou vidéo vers chaque terminal mobile ancré sur le serveur cache à désactiver ;
- la détermination, pour chaque terminal mobile ancré sur le serveur cache à désactiver, d'un serveur cache de substitution (132) situé en amont ou en aval de la topologie arborescente hiérarchique à base de couches par rapport au serveur cache à désactiver, et qui est capable de continuer à diffuser le contenu audio et/ou vidéo vers le terminal mobile en question, et la récupération de l'adressage d'envoi à la cantonade associé à la couche dans laquelle se trouve le serveur cache de substitution (132) ;
- la redirection, vers l'adressage d'envoi à la cantonade récupéré, de chaque terminal mobile qui est ancré sur le serveur cache à désactiver ; et
- la désactivation du serveur cache à désactiver.

11. Procédé selon l'une quelconque des revendications 1 à 10, comprenant :
- la détection que des conditions de délestage sont satisfaites pour ledit serveur cache (132), dénommé serveur cache à délester ;
- la sélection d'au moins un terminal, ancré sur le serveur cache à délester, lequel doit être desservi par un serveur cache de substitution (132) ;
- la récupération de l'adressage d'envoi à la cantonade associé à la couche dans laquelle se trouve le serveur cache de substitution (132) ;
- la redirection, vers l'adressage d'envoi à la cantonade récupéré, de chaque terminal mobile qui est ancré sur le serveur cache à délester ; et
- la désactivation du serveur cache à délester.

12. Produit de programme d'ordinateur comprenant des instructions amenant l'exécution du procédé selon l'une quelconque des revendications 1 à 11 lorsque lesdites instructions sont exécutées par un processeur.

13. Support de stockage d'informations stockant des instructions amenant l'exécution du procédé selon l'une quelconque des revendications 1 à 11 lorsque lesdites instructions sont lues à partir du support de stockage d'informations et exécutées par un processeur.

14. Système de diffusion de contenu audio et/ou vidéo (100) pour la diffusion d'un contenu audio et/ou vidéo vers un terminal mobile (150), le système de diffusion de contenu audio et/ou vidéo (100) étant destiné à être déployé par-dessus un réseau mobile, le système de diffusion de contenu audio et/ou vidéo (100) comprenant plusieurs serveurs caches (132), dans lequel les serveurs caches (132) sont organisés selon une topologie arborescente hiérarchique à base de couches, les serveurs caches (132) sont connectés à des noeuds d'agrégation respectifs (130) du réseau mobile de telle sorte qu'une fonction de dérivation configurable des noeuds d'agrégation (130) permette le routage vers les serveurs caches (132) de paquets adressés à un adressage d'envoi à la cantonade associé aux serveurs caches (132),
dans lequel chaque couche de la topologie arborescente hiérarchique à base de couches est associée à un adressage d'envoi à la cantonade de telle sorte que chaque couche de la topologie arborescente hiérarchique à base de couches ait un adressage d'envoi à la cantonade dédié, et dans lequel le système de diffusion de contenu audio et/ou vidéo comprend des circuits électroniques configurés pour :
- attribuer (1002) au terminal mobile (150) l'adresse d'envoi à la cantonade correspondant à la couche d'un premier serveur cache (132), à partir duquel le contenu audio et/ou vidéo doit être diffusé vers le terminal mobile (150), parmi les serveurs caches (132), et dans lequel les circuits électroniques sont configurés en outre pour :
- configurer une orientation de trafic adressée à l'adressage d'envoi à la cantonade associé à une couche en configurant la fonction de dérivation configurable du noeud d'agrégation (130) connecté à un serveur cache actif (132) de ladite couche de manière à router le trafic adressé à l'adressage d'envoi à la cantonade associé à ladite couche vers le serveur cache actif (132) ; et
- configurer en outre une orientation de trafic adressée à l'adressage d'envoi à la cantonade associé à l'une quelconque de couches en aval ou à toutes, par rapport à la couche du serveur cache actif, en configurant la fonction de dérivation configurable du noeud d'agrégation connecté audit serveur cache actif (132) de manière à router également le trafic adressé à l'adressage d'envoi à la cantonade associé à ladite couche en aval vers lesdites une quelconque des couches en aval ou toutes vers le serveur cache actif (132), de telle sorte que, lorsque le premier serveur cache (132) n'est pas en mesure d'assurer la continuité de service pour la diffusion du contenu audio et/ou vidéo vers le terminal mobile (150), ladite continuité de service est automatiquement assurée par un deuxième serveur cache (132) situé en amont dans la topologie arborescente hiérarchique à base de couches par rapport au premier serveur cache (132), dans lequel le deuxième serveur cache (132) est le serveur cache actif (132).
